# EUROPEAN PATENT APPLICATION

(11) **EP 4 489 146 A1**
(43) Date of publication of application: **08.01.2025**
(21) Application number: 22929896.3
(22) Date of filing: 09.06.2022
(51) Int. Cl.: H01M 4/86, H01M 4/90, C01B 32/00, H01M 8/10

(54) **CARBON CARRIER AND METAL-SUPPORTED CATALYST CONTAINING SAME, ELECTRODE, AND BATTERY**

(30) Priority: 04.03.2022 JP 2022033942
(71) Applicant: Nisshinbo Holdings Inc., Tokyo 103-8650 (JP)
(72) Inventor: SATO, Tetsutaro, Chiba-shi, Chiba 267-0056 (JP); KISHIMOTO, Takeaki, Chiba-shi, Chiba 267-0056 (JP); KOBAYASHI, Yoshikazu, Chiba-shi, Chiba 267-0056 (JP)
(74) Representative: Vossius & Partner Patentanwälte Rechtsanwälte mbB
(86) International application number: PCT/JP2022/023283
(87) International publication number: WO 2023/166752

(57) **Abstract**

Provided are a carbon carrier that has excellent oxidation resistance and has a carbon structure suitable for supporting catalyst metal particles, and a metal-supported catalyst, an electrode, and a battery each including the same. The carbon carrier is a carbon carrier for supporting catalyst metal particles, the carbon carrier having a ratio of an intensity of a 2D band having a peak top in a vicinity of a Raman shift of 2,680 cm⁻¹ to an intensity of a G band having a peak top in a vicinity of a Raman shift of 1,600 cm⁻¹ of 0.36 or more and 1.0 or less in a Raman spectrum obtained by Raman spectroscopy, the carbon carrier having a ratio of a crystallite size La obtained from a (110) diffraction line of carbon in an X-ray diffraction pattern obtained by powder X-ray diffraction using a CuKα ray to a crystallite size Lc obtained from a (002) diffraction line of carbon in the X-ray diffraction pattern of 2.50 or more.

## Description

### Technical Field

The present invention relates to a carbon carrier, and a metal-supported catalyst, an electrode, and a battery, each including the same.

### Background Art

In Patent Literature 1, there are descriptions of a carbon carrier that is obtained by subjecting carbon black or activated carbon to heat treatment at from 1,800°C to 2,500°C, and that has an average lattice spacing d₀₀₂ between [002] planes of from 0.337 nm to 0.348 nm, a crystallite size Lc₍₀₀₂₎ of from 3 nm to 18 nm, and a specific surface area of from 70 m²/g to 800 m²/g, and an electrode catalyst including platinum or a platinum alloy supported on the carbon carrier.

In Patent Literature 2, there are descriptions of graphitized carbon black obtained by subjecting a mixture containing carbon black and a graphitization promoting substance to heat treatment at from 2,000°C to 2,500°C, and a catalyst for a phosphoric acid fuel cell obtained by supporting platinum on the graphitized carbon black.

### Citation List

### Patent Literature

[PTL 1] JP 2000-268828 A
[PTL 2] JP 2000-273351 A

### Summary of Invention

### Technical Problem

However, in a fuel cell, while improvement in oxidation resistance could hitherto be achieved by using a graphitized carbon material as a carbon carrier for supporting catalyst metal particles in an electrode, there has been a problem of, for example, a reduction in output characteristic (e.g., a voltage in a high current density range). One possible cause of this problem is that, in the related-art carbon material, its carbon structure suitable for supporting the catalyst metal particles has been lost as graphitization proceeds.

The present invention has been made in view of the above-mentioned problem, and one of the objects of the present invention is to provide a carbon carrier that is excellent in oxidation resistance and has a carbon structure suitable for supporting catalyst metal particles, and a metal-supported catalyst, an electrode, and a battery, each including the same.

### Solution to Problem

In order to achieve the above-mentioned object, according to one embodiment of the present invention, there is provided a carbon carrier for supporting catalyst metal particles, the carbon carrier having a ratio of an intensity of a 2D band having a peak top in a vicinity of a Raman shift of 2,680 cm⁻¹ to an intensity of a G band having a peak top in a vicinity of a Raman shift of 1,600 cm⁻¹ of 0.36 or more and 1.0 or less in a Raman spectrum obtained by Raman spectroscopy, the carbon carrier having a ratio of a crystallite size La obtained from a (110) diffraction line of carbon in an X-ray diffraction pattern obtained by powder X-ray diffraction using a CuKα ray to a crystallite size Lc obtained from a (002) diffraction line of carbon in the X-ray diffraction pattern of 2.50 or more. According to the embodiment of the present invention, a carbon carrier that is excellent in oxidation resistance and has a carbon structure suitable for supporting catalyst metal particles is provided.

The carbon carrier may have a half width at half maximum of a D band having a peak top in a vicinity of a Raman shift of 1,340 cm⁻¹ of 39.0 cm⁻¹ or less in the Raman spectrum obtained by Raman spectroscopy. In the carbon carrier, the crystallite size Lc may be 1.65 nm or less. In the carbon carrier, the crystallite size La may be 2.00 nm or more.

The carbon carrier may have an average pore diameter of 5.0 nm or less. The carbon carrier may have a volume of pores each having a pore diameter of 5 nm or more and 70 nm or less of 0.130 cm³/g or less. The carbon carrier may have a ratio of a volume of pores each having a pore diameter of less than 5 nm to a volume of pores each having a pore diameter of 5 nm or more and 70 nm or less of 2.0 or more. The carbon carrier may have a volume of pores each having a pore diameter of less than 5 nm of 0.05 cm³/g or more.

The carbon carrier may have a difference obtained by, in a nitrogen adsorption isotherm obtained at a temperature of 77 K, subtracting a nitrogen adsorption amount at a relative pressure of 0.5 from a nitrogen desorption amount at a relative pressure of 0.5 of 50 cm³/g or less. The carbon carrier may have a BET specific surface area of 150 m²/g or more. The carbon carrier may have a median diameter of 3.0 µm or less.

In order to achieve the above-mentioned object, according to one embodiment of the present invention, there is provided a metal-supported catalyst, including: any one of the carbon carriers described above; and catalyst metal particles supported on the carbon carrier. According to the embodiment of the present invention, a metal-supported catalyst having excellent characteristics is provided.

In order to achieve the above-mentioned object, according to one embodiment of the present invention, there is provided an electrode, including the metal-supported catalyst described above. According to the embodiment of the present invention, an electrode having excellent durability and catalytic function is provided.

In order to achieve the above-mentioned object, according to one embodiment of the present invention, there is provided a battery, including the electrode described above. According to the embodiment of the present invention, a battery having excellent durability and output is provided.

### Advantageous Effects of Invention

According to the present invention, a carbon carrier that has excellent oxidation resistance and has a carbon structure suitable for supporting catalyst metal particles, and a metal-supported catalyst, an electrode, and a battery, each including the same, are provided.

### Brief Description of Drawings

FIG. 1 is an explanatory figure showing an example of an analysis result of a Raman spectrum obtained by Raman spectroscopy of a carbon carrier in Example according to an embodiment of the present invention.
FIG. 2A is an explanatory figure showing an example of results obtained by performing peak separation of a diffraction peak in the vicinity of a diffraction angle 2Θ of 26° in an X-ray diffraction pattern obtained by powder X-ray diffraction of a carbon carrier in Example according to an embodiment of the present invention.
FIG. 2B is an explanatory figure showing another example of results obtained by performing peak separation of a diffraction peak in the vicinity of a diffraction angle 2θ of 26° in an X-ray diffraction pattern obtained by powder X-ray diffraction of a carbon carrier in Example according to an embodiment of the present invention.
FIG. 2C is an explanatory figure showing an example of results obtained by performing peak separation of a diffraction peak in the vicinity of a diffraction angle 2Θ of 43° in the X-ray diffraction pattern obtained by powder X-ray diffraction of the carbon carrier in Example according to an embodiment of the present invention.
FIG. 3 is an explanatory figure showing an example of an adsorption isotherm obtained for the carbon carrier in Example according to an embodiment of the present invention.
FIG. 4A is an explanatory figure showing an example of a cyclic voltammogram obtained for the carbon carrier in Example according to an embodiment of the present invention.
FIG. 4B is an explanatory figure showing a relationship between the number of cycles and an electric double layer capacitance at the time of completion of each cycle obtained in an oxidation resistance test of a carbon carrier in Example according to an embodiment of the present invention.
FIG. 5 is an explanatory figure showing evaluation results of the characteristics of carbon carriers and metal-supported catalysts in Example according to an embodiment of the present invention.

### Description of Embodiments

One of the embodiments of the present invention will be described below. The present invention is not limited to examples described in the embodiment.

A carbon carrier according to an embodiment of the present invention (hereinafter referred to as "carrier of the present invention") is a carbon material mainly including carbon. The carbon content of the carrier of the present invention may be, for example, 70 wt% or more, and is preferably 75 wt% or more, more preferably 80 wt% or more, and particularly preferably 85 wt% or more.

The carbon content of the carrier of the present invention may be, for example, 100 wt% or less, 95 wt% or less, or 90 wt% or less. The carbon content of the carrier of the present invention may be specified by arbitrarily combining any one of the above-mentioned lower limit values and any one of the above-mentioned upper limit values. The carbon content of the carbon carrier is obtained by elemental analysis (combustion method).

The carrier of the present invention preferably has a carbon structure exhibiting, in a Raman spectrum obtained by Raman spectroscopy, a ratio (hereinafter referred to as "Raman 2D/G ratio") of the intensity of a 2D band having a peak top in the vicinity of a Raman shift of 2,680 cm⁻¹ (specifically, for example, in the range of 2,600 cm⁻¹ or more and 2,800 cm⁻¹ or less) to the intensity of a G band having a peak top in the vicinity of a Raman shift of 1,600 cm⁻¹ (specifically, for example, in the range of 1,550 cm⁻¹ or more and 1,700 cm⁻¹ or less) of 0.36 or more and 1.0 or less.

The Raman 2D/G ratio of the carrier of the present invention is, for example, more preferably 0.40 or more, still more preferably 0.42 or more, still more preferably 0.44 or more, still more preferably 0.45 or more, still more preferably 0.46 or more, and particularly preferably 0.47 or more.

The Raman 2D/G ratio of the carrier of the present invention is, for example, preferably 0.99 or less, more preferably 0.95 or less, still more preferably 0.90 or less, still more preferably 0.85 or less, still more preferably 0.80 or less, still more preferably 0.75 or less, still more preferably 0.70 or less, and particularly preferably 0.65 or less. The Raman 2D/G ratio of the carrier of the present invention may be specified by arbitrarily combining any one of the above-mentioned lower limit values and any one of the above-mentioned upper limit values.

Herein, the Raman 2D/G ratio of a carbon material represents the number of layers which form a stack of graphene in the carbon structure of the carbon material. That is, when the intensity of the 2D band is higher than the intensity of the G band (Raman 2D/G ratio>1), graphene is formed of a single layer. When the intensity of the 2D band is the same as the intensity of the G band (Raman 2D/G ratio=1), the number of layers in the stack of graphene is about 2. When the intensity of the 2D band is lower than the intensity of the G band (Raman 2D/G ratio<1), the number of layers in the stack of graphene is 3 or more. The number of layers stacked may be specifically determined from a ratio between the intensity of the 2D band (the height of its peak top) and the intensity of the G band (the height of its peak top).

A carbon structure exhibiting an excessively low Raman 2D/G ratio, that is, a carbon structure having an excessively large number of layers in a stack of graphene, is inferior in oxidation resistance because a relative amount of its edge portions, which serve as starting points of oxidative degradation, with respect to its basal planes is too large. In contrast, a carbon structure exhibiting a Raman 2D/G ratio equal to or higher than the above-mentioned lower limit value contributes to improvement in oxidation resistance and/or durability because the carbon structure includes graphene of fewer layers, in which the number of layers in a stack of graphene is controlled to an appropriate range (e.g., from about 2 to about 3), and a relative amount of its edge portions with respect to its basal planes exposed is controlled to an appropriate range.

Meanwhile, the edge portions also function as sites for supporting catalyst metal particles. Accordingly, a carbon structure exhibiting an excessively high Raman 2D/G ratio is inferior in aptitude for supporting catalyst metal particles because a relative amount of its edge portions with respect to its basal planes is too small. In contrast, a carbon structure exhibiting a Raman 2D/G ratio equal to or lower than the above-mentioned upper limit value has excellent aptitude for supporting catalyst metal particles, and also, contributes to improvement in durability and/or catalytic function of a metal-supported catalyst because the carbon structure includes an appropriate amount of edge portions with respect to basal planes.

The carrier of the present invention preferably has a carbon structure exhibiting, in the Raman spectrum obtained by Raman spectroscopy, a half width at half maximum (hereinafter referred to as "Raman D half width at half maximum") of a D band having a peak top in the vicinity of a Raman shift of 1,340 cm⁻¹ (specifically, for example, in the range of 1,320 cm⁻¹ or more and 1,360 cm⁻¹ or less) of 39.0 cm⁻¹ or less.

The Raman D half width at half maximum of the carrier of the present invention is, for example, more preferably 38.0 cm⁻¹ or less, still more preferably 36.0 cm⁻¹ or less, still more preferably 34.0 cm⁻¹ or less, still more preferably 32.0 cm⁻¹ or less, still more preferably 30.0 cm⁻¹ or less, still more preferably 29.0 cm⁻¹ or less, still more preferably 28.0 cm⁻¹ or less, and particularly preferably 27.5 cm⁻¹ or less.

The Raman D half width at half maximum of the carrier of the present invention is, for example, preferably 20.0 cm⁻¹ or more, more preferably 21.0 cm⁻¹ or more, still more preferably 22.0 cm⁻¹ or more, still more preferably 22.5 cm⁻¹ or more, still more preferably 23.0 cm⁻¹ or more, still more preferably 23.5 cm-¹ or more, still more preferably 24.0 cm⁻¹ or more, and particularly preferably 24.5 cm⁻¹ or more. The Raman D half width at half maximum of the carrier of the present invention may be specified by arbitrarily combining any one of the above-mentioned lower limit values and any one of the above-mentioned upper limit values.

Herein, according to a reference (A. Sadezky et al., Carbon 43 (2005) 1731-1742), in the Raman spectrum of a carbon material, the D band is a component derived from a carbon atom adjacent to a disordered lattice, such as an edge portion of a graphene layer. Moreover, the half width at half maximum of the D band represents crystallinity of carbon around the edge portion. That is, as the crystallinity of carbon around the edge portion in a carbon structure becomes higher, the Raman D half width at half maximum of the carbon structure is reduced more. Accordingly, a carbon structure exhibiting a Raman D half width at half maximum equal to or smaller than the above-mentioned upper limit value contributes to improvement in oxidation resistance and/or durability because the carbon structure includes carbon having high crystallinity around its edge portion.

Meanwhile, a carbon structure exhibiting an excessively small Raman D half width at half maximum has an inferior aptitude for supporting catalyst metal particles because the crystallinity of carbon around its edge portion is too high. In contrast, a carbon structure exhibiting a Raman D half width at half maximum equal to or larger than the above-mentioned lower limit value has excellent aptitude for supporting catalyst metal particles, and also, contributes to improvement in durability and/or catalytic function of a metal-supported catalyst because the carbon structure includes carbon having appropriate crystallinity around its edge portion.

The carrier of the present invention preferably has a carbon structure exhibiting a ratio (hereinafter referred to as "La/Lc ratio") of a crystallite size La (nm) obtained from a (110) diffraction line of carbon in an X-ray diffraction pattern obtained by powder X-ray diffraction using a CuKα ray to a crystallite size Lc (nm) obtained from a (002) diffraction line of carbon in the X-ray diffraction pattern of 2.50 or more.

The La/Lc ratio of the carrier of the present invention is, for example, more preferably 2.55 or more, still more preferably 2.60 or more, still more preferably 2.65 or more, still more preferably 2.70 or more, still more preferably 2.75 or more, still more preferably 2.80 or more, still more preferably 2.85 or more, and particularly preferably 2.90 or more.

The La/Lc ratio of the carrier of the present invention is, for example, preferably 3.50 or less, more preferably 3.45 or less, still more preferably 3.40 or less, still more preferably 3.35 or less, still more preferably 3.30 or less, still more preferably 3.25 or less, and particularly preferably 3.20 or less. The La/Lc ratio of the carrier of the present invention may be specified by arbitrarily combining any one of the above-mentioned lower limit values and any one of the above-mentioned upper limit values.

The crystallite size Lc (nm) is more specifically calculated by the following Scherrer's equation through use of the Bragg angle and full width at half maximum of a diffraction peak f_{broad} in the range of a diffraction angle 2Θ of 24.0°±4.0°, which is obtained by subjecting a diffraction line in the vicinity of a diffraction angle 2θ of 26° (specifically, for example, in the range of 2Θ of 20° or more and 28° or less) in the X-ray diffraction pattern obtained by powder X-ray diffraction using a CuKα ray, to peak separation: Lc=Kλ/βcosθ. In the equation, K represents a Scherrer constant (0.94), λ represents the wavelength of the CuKα ray (0.15418 nm), β represents the full width at half maximum (radian) of f_{broad}, and θ represents the Bragg angle (radian) of f_{broad}.

The crystallite size La (nm) is more specifically calculated by the following Scherrer's equation through use of the peak top angle and full width at half maximum of a diffraction line in the vicinity of a diffraction angle 2Θ of 43° (specifically, for example, in the range of 2θ of 41° or more and 45° or less) in the X-ray diffraction pattern obtained by powder X-ray diffraction using a CuKα ray: La=Kλ/βcosθ. In the equation, K represents a Scherrer constant (0.94), λ represents the wavelength of the CuKα ray (0.15418 nm), β represents the full width at half maximum (radian) of a peak in the vicinity of 43°, and θ represents the peak top angle (radian) of the peak in the vicinity of a diffraction angle 2θ of 43°.

When graphitization of a carbon material is advanced through heating at relatively high temperature, its carbon structure grows in an "a" axis direction, and also grows in a "c" axis direction. When the growth in the "c" axis direction is too large with respect to the growth in the "a" axis direction, the resultant carbon structure has an excessively low La/Lc ratio. A carbon structure having an excessively low La/Lc ratio has inferior oxidation resistance because the amount of its edge portions, which serve as starting points of oxidative degradation, with respect to the extent of its basal planes is too large. In addition, excessive graphitization brings about fracture of the higher order structure of pores. In contrast, a carbon structure exhibiting an La/Lc ratio equal to or higher than the above-mentioned lower limit value contributes to improvement in oxidation resistance and/or durability because the carbon structure maintains the higher order structure of pores, and has an appropriate amount of edge portions and a sufficiently large basal planes.

Meanwhile, the edge portions also function as sites for supporting catalyst metal particles. Accordingly, a carbon structure in which the amount of its edge portions with respect to the extent of its basal planes is too small, that is, a carbon structure having an excessively high La/Lc ratio loses aptitude for supporting catalyst metal particles. In contrast, a carbon structure exhibiting an La/Lc ratio equal to or lower than the above-mentioned upper limit value contributes to aptitude for supporting catalyst metal particles because the carbon structure includes an appropriate amount of edge portions.

The carrier of the present invention preferably has a carbon structure exhibiting a crystallite size Lc obtained from the (002) diffraction line of carbon in the X-ray diffraction pattern obtained by powder X-ray diffraction using a CuKα ray of 1.65 nm or less.

The Lc of the carrier of the present invention is, for example, more preferably 1.60 nm or less, still more preferably 1.55 nm or less, still more preferably 1.50 nm or less, still more preferably 1.45 nm or less, still more preferably 1.40 nm or less, still more preferably 1.35 nm or less, still more preferably 1.30 nm or less, still more preferably 1.25 nm or less, still more preferably 1.20 nm or less, still more preferably 1.15 nm or less, and particularly preferably 1.10 nm or less.

The Lc of the carrier of the present invention is, for example, preferably 0.50 nm or more, more preferably 0.60 nm or more, still more preferably 0.70 nm or more, still more preferably 0.80 nm or more, still more preferably 0.85 nm or more, and particularly preferably 0.90 nm or more. The Lc of the carrier of the present invention may be specified by arbitrarily combining any one of the above-mentioned lower limit values and any one of the above-mentioned upper limit values. A carbon structure having an excessively small Lc has inferior oxidation resistance because the amount of its edge portions, which serve as starting points of oxidative degradation, with respect to the extent of its basal planes is too large. In contrast, a carbon structure having an Lc equal to or higher than the above-mentioned lower limit value has excellent oxidation resistance because the amount of its edge portions is not too large.

The carrier of the present invention preferably has a carbon structure exhibiting a crystallite size La obtained from the (110) diffraction line of carbon in the X-ray diffraction pattern obtained by powder X-ray diffraction using a CuKα ray of 2.00 nm or more.

The La of the carrier of the present invention is, for example, more preferably 2.10 nm or more, still more preferably 2.20 nm or more, still more preferably 2.30 nm or more, still more preferably 2.40 nm or more, still more preferably 2.50 nm or more, still more preferably 2.55 nm or more, and particularly preferably 2.60 nm or more.

The La of the carrier of the present invention is, for example, preferably 3.40 nm or less, more preferably 3.30 nm or less, still more preferably 3.25 nm or less, still more preferably 3.20 nm or less, still more preferably 3.15 nm or less, and particularly preferably 3.10 nm or less. The La of the carrier of the present invention may be specified by arbitrarily combining any one of the above-mentioned lower limit values and any one of the above-mentioned upper limit values.

The carrier of the present invention preferably has a BET specific surface area of 150 m²/g or more. The BET specific surface area of the carrier of the present invention is, for example, more preferably 200 m²/g or more, still more preferably 250 m²/g or more, still more preferably 300 m²/g or more, still more preferably 350 m²/g or more, still more preferably 400 m²/g or more, still more preferably 450 m²/g or more, still more preferably 500 m²/g or more, still more preferably 550 m²/g or more, still more preferably 600 m²/g or more, still more preferably 650 m²/g or more, still more preferably 700 m²/g or more, still more preferably 750 m²/g or more, still more preferably 800 m²/g or more, still more preferably 850 m²/g or more, and particularly preferably 900 m²/g or more.

The BET specific surface area of the carrier of the present invention may be, for example, 3,000 m²/g or less, 2,500 m²/g or less, 2,000 m²/g or less, 1,500 m²/g or less, or 1,300 m²/g or less. The BET specific surface area of the carrier of the present invention may be specified by arbitrarily combining any one of the above-mentioned lower limit values and any one of the above-mentioned upper limit values. The BET specific surface area (m²/g) of the carrier of the present invention is obtained by a BET method from a nitrogen adsorption isotherm at a temperature of 77 K.

The carrier of the present invention preferably has an average pore diameter of 5.0 nm or less. The average pore diameter of the carrier of the present invention is, for example, more preferably 4.8 nm or less, still more preferably 4.6 nm or less, still more preferably 4.4 nm or less, still more preferably 4.2 nm or less, still more preferably 4.0 nm or less, still more preferably 3.8 nm or less, still more preferably 3.6 nm or less, still more preferably 3.4 nm or less, still more preferably 3.2 nm or less, and particularly preferably 3.0 nm or less.

The average pore diameter of the carrier of the present invention is, for example, preferably 1.0 nm or more, more preferably 1.5 nm or more, and particularly preferably 2.0 nm or more. The average pore diameter of the carrier of the present invention may be specified by arbitrarily combining any one of the above-mentioned lower limit values and any one of the above-mentioned upper limit values. The average pore diameter of the carrier of the present invention is obtained by a BJH method from a nitrogen adsorption isotherm at a temperature of 77 K.

When the average pore diameter of a carbon carrier is too large, for example, in the case where a metal-supported catalyst obtained by supporting catalyst metal particles on the carbon carrier is used as an electrode catalyst of a fuel cell, an ionomer is liable to penetrate into pores of the carbon carrier. As a result, the catalyst metal particles supported in the pores are covered with the ionomer, and a reduction in catalytic activity is liable to occur. In contrast, a porous structure having an average pore diameter equal to or smaller than the above-mentioned upper limit value contributes to improvement in durability and/or catalytic function of the metal-supported catalyst because the ionomer is less liable to penetrate into its pores.

In addition, when the average pore diameter of the carbon carrier is too small, the catalyst metal particles are liable to be supported on the outer surface of the carbon carrier rather than in its pores, and hence durability is reduced. In contrast, a porous structure having an average pore diameter equal to or larger than the above-mentioned lower limit value contributes to improvement in durability of the metal-supported catalyst because the catalyst metal particles are effectively supported in its pores.

The carrier of the present invention preferably has a ratio (hereinafter referred to as "less than 5 nm/5-70 pore volume ratio") of the volume (cm³/g) of pores each having a pore diameter of less than 5 nm (hereinafter referred to as "less than 5 nm pore volume") to the volume (cm³/g) of pores each having a pore diameter of 5 nm or more and 70 nm or less (hereinafter referred to as "5-70 nm pore volume") of 2.0 or more.

The less than 5 nm/5-70 pore volume ratio of the carrier of the present invention is, for example, more preferably 2.5 or more, still more preferably 3.0 or more, still more preferably 3.5 or more, still more preferably 4.0 or more, still more preferably 5.0 or more, still more preferably 6.0 or more, still more preferably 7.0 or more, still more preferably 8.0 or more, still more preferably 10.0 or more, still more preferably 12.0 or more, still more preferably 14.0 or more, and particularly preferably 15.0 or more.

The less than 5 nm/5-70 pore volume ratio of the carrier of the present invention may be, for example, 50.0 or less, and is preferably 45.0 or less, more preferably 40.0 or less, still more preferably 35.0 or less, still more preferably 30.0 or less, still more preferably 28.0 or less, and particularly preferably 27.0 or less. The less than 5 nm/5-70 pore volume ratio of the carrier of the present invention may be specified by arbitrarily combining any one of the above-mentioned lower limit values and any one of the above-mentioned upper limit values. The less than 5 nm/5-70 pore volume ratio of the carrier of the present invention is calculated from the 5-70 nm pore volume and the less than 5 nm pore volume each obtained by a BJH method from the nitrogen adsorption isotherm at a temperature of 77 K.

When the less than 5 nm/5-70 pore volume ratio of a carbon carrier is too low (that is, when the 5-70 nm pore volume is too large compared to the less than 5 nm pore volume), for example, in the case where a metal-supported catalyst obtained by supporting catalyst metal particles on the carbon carrier is used as an electrode catalyst of a fuel cell, generated water is liable to penetrate into its pores. As a result, the catalyst metal particles supported in the pores are liable to be degraded owing to oxidation. In contrast, a porous structure having a less than 5 nm/5-70 pore volume ratio equal to or higher than the above-mentioned lower limit value contributes to improvement in durability and/or function of the metal-supported catalyst obtained by supporting catalyst metal particles on the carbon carrier because the catalyst metal particles supported in the pores are less liable to be degraded.

In addition, when the less than 5 nm/5-70 pore volume ratio of the carbon carrier is too high (that is, when the less than 5 nm pore volume is too large compared to the 5-70 nm pore volume), the catalyst metal particles are liable to be supported on the outer surface of the carbon carrier rather than in its pores, and hence durability is reduced. In contrast, the carrier of the present invention having a less than 5 nm/5-70 pore volume ratio equal to or lower than the above-mentioned upper limit value contributes to improvement in durability because the catalyst metal particles are effectively supported in its pores.

The carrier of the present invention preferably has a 5-70 nm pore volume of 0.13 cm³/g or less. The 5-70 nm pore volume of the carrier of the present invention is, for example, more preferably 0.12 cm³/g or less, still more preferably 0.10 cm³/g or less, still more preferably 0.08 cm³/g or less, still more preferably 0.07 cm³/g or less, still more preferably 0.06 cm³/g or less, and particularly preferably 0.05 cm³/g or less.

The 5-70 nm pore volume of the carrier of the present invention may be, for example, 0.005 cm³/g or more, and is preferably 0.01 cm³/g or more, and particularly preferably 0.02 cm³/g or more. The 5-70 nm pore volume of the carrier of the present invention may be specified by arbitrarily combining any one of the above-mentioned lower limit values and any one of the above-mentioned upper limit values. The 5-70 nm pore volume of the carrier of the present invention is obtained by a BJH method from the nitrogen adsorption isotherm at a temperature of 77 K.

In the pores each of which having a relatively large pore diameter in a carbon carrier, for example, in the case where a metal-supported catalyst obtained by supporting catalyst metal particles on the carbon carrier is used as an electrode catalyst of a fuel cell, a proton path resulting from generated water is hardly formed. In contrast, a porous structure having a 5-70 nm pore volume equal to or smaller than the above-mentioned upper limit value contributes to improvement in function of the metal-supported catalyst obtained by supporting catalyst metal particles on the carbon carrier because the proton path resulting from generated water is effectively formed.

The carrier of the present invention preferably has a less than 5 nm pore volume of 0.05 cm³/g or more. The less than 5 nm pore volume of the carrier of the present invention is, for example, more preferably 0.10 cm³/g or more, still more preferably 0.15 cm³/g or more, still more preferably 0.20 cm³/g or more, still more preferably 0.25 cm³/g or more, still more preferably 0.30 cm³/g or more, still more preferably 0.35 cm³/g or more, still more preferably 0.40 cm³/g or more, and particularly preferably 0.45 cm³/g or more.

The less than 5 nm pore volume of the carrier of the present invention may be, for example, 1.00 cm³/g or less, and is preferably 0.95 cm³/g or less, more preferably 0.90 cm³/g or less, still more preferably 0.85 cm³/g or less, still more preferably 0.80 cm³/g or less, still more preferably 0.75 cm³/g or less, still more preferably 0.70 cm³/g or less, and particularly preferably 0.65 cm³/g or less. The less than 5 nm pore volume of the carrier of the present invention may be specified by arbitrarily combining any one of the above-mentioned lower limit values and any one of the above-mentioned upper limit values. The less than 5 nm pore volume of the carrier of the present invention is obtained by a BJH method from the nitrogen adsorption isotherm at a temperature of 77 K.

Catalyst metal particles exhibiting high catalytic activity, each having a relatively small particle diameter, are easily supported in the pores, each of which has a relatively small pore diameter in a carbon carrier. Accordingly, a porous structure having a less than 5 nm pore volume equal to or larger than the above-mentioned lower limit value contributes to improvement in function of a metal-supported catalyst obtained by supporting the catalyst metal particles on the carbon carrier.

The carrier of the present invention preferably has a carbon structure exhibiting, in the nitrogen adsorption isotherm obtained at a temperature of 77 K, a difference (hereinafter referred to as "N₂ desorption-adsorption amount difference") obtained by subtracting a nitrogen adsorption amount from a nitrogen desorption amount at a relative pressure (P/P₀), which is a ratio of an adsorption equilibrium pressure (P) to a saturated vapor pressure (P₀), of 0.5 of 50 cm³/g or less.

The N₂ desorption-adsorption amount difference of the carrier of the present invention is, for example, more preferably 45 cm³/g or less, still more preferably 40 cm³/g or less, still more preferably 35 cm³/g or less, still more preferably 30 cm³/g or less, still more preferably 25 cm³/g or less, and particularly preferably 20 cm³/g or less. The N₂ desorption-adsorption amount difference of the carrier of the present invention may be, for example, 0 cm³/g or more, or 1 cm³/g or more. The N₂ desorption-adsorption amount difference of the carrier of the present invention may be specified by arbitrarily combining any one of the above-mentioned lower limit values and any one of the above-mentioned upper limit values.

As pores in a carbon carrier have higher interconnectivity, the nitrogen adsorption isotherm of the carbon carrier shows lower hysteresis, and the N₂ desorption-adsorption amount difference of the carbon carrier is reduced more. Accordingly, a porous structure exhibiting a N₂ desorption-adsorption amount difference equal to or smaller than the above-mentioned upper limit value (that is, a porous structure having higher interconnectivity) contributes to improvement in durability and/or catalytic function of a metal-supported catalyst obtained by supporting catalyst metal particles on the carbon carrier because, for example, in the case where the metal-supported catalyst is used as an electrode catalyst of a fuel cell, water generated in its pores is effectively discharged.

The carrier of the present invention preferably has a median diameter of 3.0 µm or less. The median diameter of the carrier of the present invention is, for example, more preferably 2.5 µm or less, more preferably 2.0 µm or less, more preferably 1.5 µm or less, more preferably 1.0 µm or less, more preferably 0.9 µm or less, more preferably 0.8 µm or less, and particularly preferably 0.7 µm or less.

The median diameter of the carrier of the present invention may be, for example, 0.1 µm or more, and is preferably 0.2 µm or more, more preferably 0.3 µm or more, still more preferably 0.4 µm or more, and particularly preferably 0.5 µm or more. The median diameter of the carrier of the present invention may be specified by arbitrarily combining any one of the above-mentioned lower limit values and any one of the above-mentioned upper limit values. The median diameter of the carrier of the present invention is measured with a laser diffraction particle size distribution measuring device.

When the median diameter of a carbon carrier is too large, the thickness of a catalyst layer of an electrode including a metal-supported catalyst obtained by supporting catalyst metal particles on the carbon carrier becomes too large. In contrast, a carbon carrier having a median diameter equal to or smaller than the above-mentioned upper limit value contributes to reduction in thickness of a catalyst layer including a metal-supported catalyst obtained by supporting catalyst metal particles on the carbon carrier.

In addition, when the median diameter of the carbon carrier is too small, the dispersibility of the catalyst metal particles supported on the carbon carrier becomes insufficient. In contrast, a carbon carrier having a median diameter equal to or larger than the above-mentioned lower limit value contributes to improvement in dispersibility of catalyst metal particles supported on the carbon carrier. In addition, when the median diameter of the carbon carrier is too small, for example, in the case where a metal-supported catalyst including the carbon carrier is used as an electrode catalyst of a fuel cell, the metal-supported catalyst becomes too dense in a catalyst layer of the electrode, and hence transport paths of a proton and oxygen are complicated, which results in increases in their transport resistances, and as a result, an output characteristic (e.g., a voltage in a high current density range) is liable to be reduced. In contrast, a carbon carrier having a median diameter equal to or larger than the above-mentioned lower limit value suppresses increases in transport resistances of a proton and oxygen in the catalyst layer of the electrode, and contributes to improvement in output characteristic.

In a potential cycle test involving using a rotating ring-disk electrode apparatus including a working electrode carrying the carrier of the present invention, and repeating the following cycle 17,000 times: the working electrode is kept for 3 seconds under the state in which a voltage of 1.4 V (vs. NHE) is applied thereto, and is then kept for 3 seconds in the state where a voltage of 0 V (vs. NHE) is applied thereto, the carrier of the present invention preferably has an arithmetic average value (hereinafter referred to as "average dQ") of change amounts (A·sec) in electric double layer capacitance at the time of completion of "n" cycles, which is calculated by the following equation (I), of -3.5×10⁻⁵ (A·sec) or more. Change amount (A·sec) in electric double layer capacitance at the time of completion of "n" cycles = {electric double layer capacitance at the time of completion of "n" cycles} -{electric double layer capacitance at the time of completion of (n-1,000) cycles)

In the equation (I), "n" is the number of cycles in the potential cycle test, and represents 10,000, 11,000, 12,000, 13,000, 14,000, 15,000, 16,000, or 17,000. Accordingly, the average dQ is obtained by dividing the total of the eight change amounts (A·sec) in electric double layer capacitance, that have each been obtained by the equation (I), by 8.

The average dQ of the carrier of the present invention is, for example, more preferably -3.0×10⁻⁵ (A·sec) or more, still more preferably -2.0×10⁻⁵ (A·sec) or more, still more preferably -1.0×10⁻⁵ (A·sec) or more, still more preferably -5.0×10⁻⁶ (A·sec) or more, and particularly preferably -3.0×10⁻⁶ (A·sec) or more. The average dQ of the carrier of the present invention may be, for example, 5.0×10⁻⁴ (A·sec) or less, 1.0×10⁻⁴ (A·sec) or less, or 5.0×10⁻⁵ (A·sec) or less. The average dQ of the carrier of the present invention may be specified by arbitrarily combining any one of the above-mentioned lower limit values and any one of the above-mentioned upper limit values.

As a carbon carrier has higher oxidation resistance, the average dQ of the carbon carrier is increased more. That is, when the average dQ of a carbon carrier is a negative value, a smaller absolute value means that the carbon carrier has higher oxidation resistance. When the average dQ of a carbon carrier is a positive value, a larger absolute value means that the carbon carrier has higher oxidation resistance.

The carrier of the present invention is preferably a carbonized material. The carbonized material is obtained by carbonizing a raw material containing an organic substance. The content of the organic substance in the raw material for carbonization may be, for example, 5 wt% or more and 90 wt% or less, and is preferably 10 wt% or more and 80 wt% or less.

The organic substance contained in the raw material is not particularly limited as long as the organic substance can be carbonized. An organic compound contained in the organic substance may be a polymer (e.g., a thermosetting resin and/or a thermoplastic resin), and/or may be an organic compound having a smaller molecular weight.

Specifically, the organic substance may be, for example, one or more selected from the group consisting of: polyacrylonitrile; a polyacrylonitrile-polyacrylic acid copolymer; a polyacrylonitrile-polymethyl acrylate copolymer; a polyacrylonitrile-polymethacrylic acid copolymer; a polyacrylonitrile-polymethacrylic acid-polymethallylsulfonic acid copolymer; a polyacrylonitrile-polymethyl methacrylate copolymer; a phenol resin; polyfurfuryl alcohol; furan; a furan resin; a phenol formaldehyde resin; melamine; a melamine resin; an epoxy resin; a nitrogen-containing chelate resin (e.g., one or more selected from the group consisting of: a polyamine-type chelate resin; an iminodiacetic acid-type chelate resin; an aminophosphoric acid-type chelate resin; and an aminomethylphosphonic acid-type chelate resin); a polyamideimide resin; pyrrole; polypyrrole; polyvinyl pyrrole; 3-methyl polypyrrole; acrylonitrile; polyvinylidene chloride; thiophene; oxazole; thiazole; pyrazole; vinylpyridine; polyvinylpyridine; pyridazine; pyrimidine; piperazine; pyran; morpholine; imidazole; 1-methylimidazole; 2-methylimidazole; quinoxaline; aniline; polyaniline; succinic acid dihydrazide; adipic acid dihydrazide; polysulfone; polyaminobismaleimide; polyimide; polyvinyl alcohol; polyvinyl butyral; benzimidazole; polybenzimidazole; polyamide; polyester; polylactic acid; polyether; polyether ether ketone; cellulose; carboxymethyl cellulose; lignin; chitin; chitosan; pitch; silk; wool; polyamino acid; a nucleic acid; DNA; RNA; hydrazine; hydrazide; urea; salen; polycarbazole; polybismaleimide; triazine; polyacrylic acid; a polyacrylic acid ester; a polymethacrylic acid ester; polymethacrylic acid; polyurethane; polyamidoamine; and polycarbodiimide.

The carrier of the present invention preferably contains nitrogen. That is, the carrier of the present invention preferably contains a nitrogen atom in its carbon structure. The carrier of the present invention containing nitrogen is preferably a carbonized material containing nitrogen. The carbonized material containing nitrogen is obtained by, for example, carbonizing a raw material containing a nitrogen-containing organic substance. The nitrogen-containing organic substance preferably contains a nitrogen-containing organic compound. The nitrogen-containing organic compound is not particularly limited as long as the organic compound contains a nitrogen atom in its molecule. In addition, the nitrogen contained in the carrier of the present invention may be nitrogen introduced by nitrogen doping treatment.

The nitrogen content of the carrier of the present invention may be, for example, 0.10 wt% or more, and is preferably 0.15 wt% or more, more preferably 0.20 wt% or more, still more preferably 0.25 wt% or more, and particularly preferably 0.30 wt% or more. The nitrogen content of the carrier of the present invention may be, for example, 10.00 wt% or less. The nitrogen content of the carbon carrier is obtained by subjecting the carbon carrier to elemental analysis (combustion method).

The carrier of the present invention is preferably a carbonized material obtained by carbonizing a raw material containing an organic substance and a metal. In this case, the carrier of the present invention may be a carbonized material subjected to metal removal treatment after the carbonization. The metal removal treatment is treatment for reducing the amount of a raw material-derived metal contained in the carbonized material. Specifically, the metal removal treatment is preferably, for example, washing treatment with an acid and/or electrolytic treatment.

When the carrier of the present invention is a carbonized material obtained by carbonizing a raw material containing an organic substance and a metal, the carrier of the present invention may contain a metal derived from the raw material for carbonization (hereinafter referred to as "raw material metal"). In this case, the carrier of the present invention contains the raw material metal inside a skeleton forming a porous structure thereof. Even when the carrier of the present invention is a carbonized material produced through metal removal treatment as described above, the raw material metal remains inside the skeleton of the carrier of the present invention. The weight of a raw material metal contained inside the skeleton of the carrier of the present invention among the raw material metals contained in the carrier of the present invention may be larger than the weight of a raw material metal contained in the surface of the skeleton of the carrier of the present invention.

The raw material metal inside the skeleton of the carrier of the present invention may be detected by, for example, subjecting the skeleton to surface etching treatment and analyzing a cross-section exposed by the etching treatment. That is, in this case, when one particle of the carrier of the present invention is subjected to etching treatment, the raw material metal is detected in a cross-section of the particle exposed by the etching treatment. The raw material metal contained in the carrier of the present invention may be detected by, for example, inductively coupled plasma atomic emission spectroscopy of the carrier of the present invention.

The raw material metal content of the carrier of the present invention (proportion of the weight of the raw material metal contained in the carrier of the present invention to the weight of the carrier of the present invention) may be, for example, 0.001 wt% or more, 0.005 wt% or more, 0.01 wt% or more, or 0.02 wt% or more. The raw material metal content of the carrier of the present invention may be, for example, 5 wt% or less, 4 wt% or less, 3 wt% or less, 2 wt% or less, 1 wt% or less, 0.8 wt% or less, or 0.5 wt% or less. The raw material metal content of the carrier of the present invention may be specified by arbitrarily combining any one of the above-mentioned lower limit values and any one of the above-mentioned upper limit values. The raw material metal content of the carrier of the present invention is obtained by, for example, inductively coupled plasma atomic emission spectroscopy of the carrier of the present invention.

The raw material metal is preferably a transition metal. That is, the raw material metal is preferably a transition metal belonging to Groups III to XII in the periodic table, and particularly preferably a transition metal belonging to the fourth period of Groups III to XII in the periodic table.

The raw material metal may be a transition metal other than platinum. In addition, the raw material metal may be a transition metal other than noble metals (e.g., ruthenium (Ru), palladium (Pd), rhodium (Rh), silver (Ag), osmium (Os), iridium (Ir), platinum (Pt), and gold (Au)).

Specifically, the raw material metal may be, for example, one or more selected from the group consisting of: scandium (Sc); titanium (Ti); vanadium (V); chromium (Cr); manganese (Mn); iron (Fe); cobalt (Co); nickel (Ni); copper (Cu); zinc (Zn); yttrium (Y); zirconium (Zr); niobium (Nb); molybdenum (Mo); ruthenium (Ru); rhodium (Rh); palladium (Pd); silver (Ag); lanthanoids (e.g., gadolinium (Gd)); and actinoids, and is preferably one or more selected from the group consisting of: Fe; Co; Ni; Cu; and Zn, more preferably one or more selected from the group consisting of: Fe; Co; Ni; and Zn, and particularly preferably one or more selected from the group consisting of: Co; Ni; and Zn.

The carbonization in the production of the carbonized material is performed by heating the raw material at a temperature at which the organic substance contained in the raw material is carbonized. The carbonizing temperature is not particularly limited as long as the raw material is carbonized at the temperature, and is, for example, preferably 1,200°C or more, more preferably 1,300°C or more, still more preferably 1,400°C or more, and particularly preferably 1,500°C or more.

The carbonizing temperature may be, for example, 3,000°C or less, and is preferably 2,500°C or less, more preferably 2,000°C or less, and particularly preferably 1,900°C or less. The carbonizing temperature may be specified by arbitrarily combining any one of the above-mentioned lower limit values and any one of the above-mentioned upper limit values. A temperature increase rate up to the carbonizing temperature is not particularly limited, and may be, for example, 0.5°C/min or more and 300°C/min or less. The carbonization is preferably performed in an inert atmosphere such as a nitrogen atmosphere.

The carbonization may be performed under normal pressure (atmospheric pressure), but is preferably performed under pressure (under a pressure higher than atmospheric pressure). When the carbonization is performed under pressure, the pressure of the atmosphere for carbonization may be, for example, 0.05 MPa or more in terms of a gauge pressure, and is preferably 0.15 MPa or more, more preferably 0.20 MPa or more, still more preferably 0.40 MPa or more, and particularly preferably 0.50 MPa or more in terms of a gauge pressure. The upper limit value of the pressure of the atmosphere for carbonization is not particularly limited, but the pressure may be, for example, 10 MPa or less in terms of a gauge pressure.

The carrier of the present invention is preferably a carbonized material subjected to graphitization treatment after carbonization. That is, the carrier of the present invention is preferably, for example, a carbonized material obtained by further subjecting the carbonized material obtained by carbonizing the raw material containing the organic substance to graphitization treatment.

The graphitization treatment is performed by heating the carbonized material at a temperature at which graphitization proceeds. A heating temperature at which the carbonized material is heated in the graphitization treatment is not particularly limited as long as graphitization proceeds in the carbonized material at the temperature, but is preferably a temperature higher than the carbonizing temperature for obtaining the carbonized material.

Specifically, the heating temperature in the graphitization treatment may be, for example, 1,300°C or more, and is preferably 1,400°C or more, more preferably 1,500°C or more, still more preferably 1,600°C or more, still more preferably 1,700°C or more, still more preferably 1,750°C or more, and particularly preferably 1,800°C or more.

The heating temperature in the graphitization treatment may be, for example, 3,000°C or less, and is preferably 2,500°C or less, more preferably 2,400°C or less, still more preferably 2,300°C or less, still more preferably 2,250°C or less, still more preferably 2,200°C or less, still more preferably 2,150°C or less, and particularly preferably 2,100°C or less. The heating temperature in the graphitization treatment may be specified by arbitrarily combining any one of the above-mentioned lower limit values and any one of the above-mentioned upper limit values. A temperature increase rate up to the heating temperature in the graphitization treatment is not particularly limited, and may be, for example, 0.5°C/min or more and 300°C/min or less. The graphitization treatment is preferably performed in an inert atmosphere such as a nitrogen atmosphere.

When the carrier of the present invention is a carbonized material subjected to graphitization treatment after carbonization, the carbonized material after the graphitization treatment is preferably not to be subjected to pulverization treatment. That is, in the production of the carrier of the present invention, for example, the following procedure is preferred: the carbonized material obtained by carbonizing the raw material is subjected to pulverization treatment to adjust its particle diameter (e.g., median diameter); the carbonized material having been pulverized is then subjected to graphitization treatment; and the carbonized material after the graphitization treatment is not to be subjected to pulverization treatment.

The carrier of the present invention is preferably a carbon material exhibiting catalytic activity. That is, in this case, the carrier of the present invention is preferably a carbon catalyst that itself exhibits catalytic activity alone. The carrier of the present invention serving as a carbon catalyst is preferably a carbonized material obtained by carbonizing a raw material containing an organic substance and a metal as described above.

The catalytic activity to be exhibited by the carrier of the present invention is, for example, preferably reduction activity and/or oxidation activity, more preferably oxygen reduction activity and/or hydrogen oxidation activity, and particularly preferably at least oxygen reduction activity.

The carrier of the present invention is a carbon carrier for supporting catalyst metal particles. In this respect, a metal-supported catalyst according to an embodiment of the present invention (hereinafter referred to as "catalyst of the present invention") includes the carrier of the present invention and catalyst metal particles supported on the carrier of the present invention.

The catalyst of the present invention is produced by supporting the catalyst metal particles on the carrier of the present invention. That is, for example, the carrier of the present invention is impregnated with a precursor of a metal for forming the catalyst metal particles, and the carrier of the present invention impregnated with the precursor is then subjected to reduction treatment, to thereby support the catalyst metal particles each containing the metal on the carrier of the present invention.

The catalyst metal particles are not particularly limited as long as the metal particles each exhibit catalytic activity, but are, for example, preferably metal particles each exhibiting reduction activity and/or oxidation activity, more preferably metal particles each exhibiting oxygen reduction activity and/or hydrogen oxidation activity, and particularly preferably metal particles each exhibiting at least oxygen reduction activity.

Specifically, the catalyst metal particles are preferably metal particles each containing a noble metal (hereinafter referred to as "noble metal particles"). The noble metal particles each contain a pure noble metal (noble metal prevented from forming an alloy) and/or a noble metal alloy (an alloy of a noble metal and a metal other than the noble metal (hereinafter referred to as "non-noble metal")). The noble metal alloy is an alloy of one or more noble metal and one or more non-noble metal.

The noble metal is preferably, for example, one or more selected from the group consisting of: ruthenium (Ru); palladium (Pd); rhodium (Rh); silver (Ag); osmium (Os); iridium (Ir); platinum (Pt); and gold (Au), more preferably one or more selected from the group consisting of: Ru; Pd; Rh; Ir; and Pt, and particularly preferably Pt. That is, the noble metal particles are particularly preferably platinum particles (metal particles each containing platinum). The platinum particles each contain pure platinum (platinum prevented from forming an alloy) and/or a platinum alloy (alloy of platinum and a non-noble metal).

The non-noble metal for forming the noble metal alloy is not particularly limited as long as the non-noble metal forms an alloy with a noble metal, but is preferably a transition metal other than a noble metal. Specifically, the non-noble metal contained in the noble metal alloy is, for example, preferably one or more selected from the group consisting of: titanium (Ti); manganese (Mn); iron (Fe); cobalt (Co); nickel (Ni); copper (Cu); niobium (Nb); and cerium (Ce), more preferably one or more selected from the group consisting of: Fe; Co; and Ni, and particularly preferably one or more selected from the group consisting of: Co; and Ni.

When the carrier of the present invention is a carbonized material of a raw material containing an organic substance and a raw material metal, the catalyst metal particles supported on the carrier of the present invention may contain the same metal as the raw material metal, or may not contain the same kind of metal as the raw material metal.

The catalyst of the present invention preferably has a proportion (hereinafter referred to as "noble metal content") of the weight of the noble metal contained in the catalyst of the present invention (more specifically, the noble metal contained in the catalyst metal particles) to the weight of the catalyst of the present invention of 10 wt% or more. The noble metal content of the catalyst of the present invention is, for example, more preferably 20 wt% or more, still more preferably 30 wt% or more, still more preferably 35 wt% or more, still more preferably 40 wt% or more, still more preferably 45 wt% or more, and particularly preferably 47 wt% or more.

The noble metal content of the catalyst of the present invention may be, for example, 90 wt% or less, 80 wt% or less, 70 wt% or less, or 60 wt% or less. The noble metal content of the catalyst of the present invention may be specified by arbitrarily combining any one of the above-mentioned lower limit values and any one of the above-mentioned upper limit values. The noble metal content of the catalyst of the present invention is obtained by inductively coupled plasma atomic emission spectroscopy.

An electrode according to an embodiment of the present invention (hereinafter referred to as "electrode of the present invention") includes the catalyst of the present invention. That is, the electrode of the present invention is, for example, a battery electrode including an electrode base material and the catalyst of the present invention supported on the electrode base material. The electrode of the present invention is preferably a battery electrode. That is, the electrode of the present invention is preferably, for example, an electrode for a fuel cell (e.g., a polymer electrolyte fuel cell), an air cell, a water electrolyzer (e.g., a polymer electrolyte water electrolyzer), a redox flow battery, or a halogen battery.

The electrode of the present invention may be a cathode or an anode, but is preferably a cathode. That is, the electrode of the present invention is a cathode or an anode of a fuel cell, an air cell, a water electrolyzer, a redox flow battery, or a halogen battery, preferably a cathode.

A battery according to an embodiment of the present invention (hereinafter referred to as "battery of the present invention") includes the electrode of the present invention. Specifically, the battery of the present invention is preferably a fuel cell (e.g., a polymer electrolyte fuel cell), an air cell, a redox flow battery, or a halogen battery including the electrode of the present invention. The battery of the present invention is preferably a membrane electrode assembly (MEA) including the electrode of the present invention.

The battery of the present invention is a battery including the electrode of the present invention as a cathode or an anode, preferably a battery including the electrode of the present invention as a cathode. That is, the battery of the present invention is a fuel cell, an air cell, a redox flow battery, or a halogen battery including the electrode of the present invention as a cathode or an anode, preferably a fuel cell, an air cell, a redox flow battery, or a halogen battery including the electrode of the present invention as a cathode.

Next, specific Examples according to the embodiments of the present invention will be described.

### Examples

### [Production of Carbon Carrier]

1.0 g of polyacrylonitrile, 1.0 g of 2-methylimidazole, 6.0 g of zinc chloride (ZnCl₂), and 30 g of dimethylformamide were mixed. The solvent was removed from the resultant mixture by drying. The dried mixture was heated in the atmosphere and subjected to infusibilization at 250°C.

The infusibilized mixture was carbonized by heating the infusibilized mixture at 1,500°C under a gauge pressure of 0.90 MPa in a nitrogen atmosphere. Dilute hydrochloric acid was added to the carbonized material obtained by the carbonization, and the mixture was stirred. After that, the suspension containing the carbonized material was filtered with a filtration membrane, and the carbonized material was washed with distilled water until the filtrate became neutral. In this manner, metal removal treatment by washing with an acid was performed.

The carbonized material after the metal removal treatment was pulverized with a fine pulverizer until a particle diameter median value thereof reached 0.4 µm or less. The carbonized material after the pulverization was dried in a vacuum so that water was removed. After that, the carbonized material was subjected to heating treatment at 300°C in a nitrogen atmosphere. The carbonized material thus obtained was used as a carbon carrier C1500.

A carbonized material, which was obtained by the same method as in the case of the carbon carrier C1500 except that a carbonizing temperature of 2,000°C was adopted instead of 1,500°C, was used as a carbon carrier C2000.

The carbon carrier C1500 was subjected to graphitization treatment by being heated at 1,800°C, 1,900°C, 2,000°C, 2,100°C, 2,200°C, or 2,400°C under normal pressure in a nitrogen atmosphere. The carbonized materials thus obtained by the graphitization treatment at 1,800°C, 1,900°C, 2,000°C, 2,100°C, 2,200°C, and 2,400°C were used as a carbon carrier C1500-G1800, a carbon carrier C1500-G1900, a carbon carrier C1500-G2000, a carbon carrier C1500-G2100, a carbon carrier C1500-G2200, and a carbon carrier C1500-G2400, respectively.

Commercially available Ketjen Black (EC600JD, manufactured by Lion Specialty Chemicals Co., Ltd.) was used as a carbon carrier KB. In addition, the carbon carrier KB was subjected to graphitization treatment by being heated at 2,000°C under normal pressure in a nitrogen atmosphere. The carbon material obtained by the graphitization treatment was used as a carbon carrier KB-G2000.

A commercially available porous carbon material (CNovel, manufactured by Toyo Tanso Co., Ltd.) was used as a carbon carrier PC. In addition, the carbon carrier PC was subjected to graphitization treatment by being heated at 1,700°C or 2,000°C under normal pressure. Further, the carbon material after the graphitization was pulverized with a fine pulverizer until a particle diameter median value thereof reached 0.4 µm or less. The carbon material after the pulverization was dried in a vacuum so that water was removed. After that, the carbon material was subjected to activation treatment by being heated at 540°C in an air atmosphere. The carbon materials thus obtained by the graphitization treatment at 1,700°C and 2,000°C were used as a carbon carrier PC-G1700A and a carbon carrier PC-G2000A, respectively.

### [Raman Spectroscopy]

The carbon carrier was analyzed by Raman spectroscopy. A Raman spectrum was measured with a HORIBA microlaser Raman spectroscopic measuring device (LabRAM, HORIBA Jobin Yvon). The laser used for the measurement had an excitation wavelength of 532 nm and an output of 50 mW, and measurement was performed through a neutral density filter D3 under the conditions of exposure of 90 seconds×integration of 2 times. Thus, a Raman spectrum was obtained.

The obtained Raman spectrum was subjected to baseline correction. That is, a straight line connecting the scattering intensity at which a Raman shift (cm⁻¹) was in the vicinity of 600 cm⁻¹ and the scattering intensity at which a Raman shift (cm⁻¹) was in the vicinity of 2,000 cm⁻¹ was determined as a baseline, and the baseline was subtracted from each intensity of the scattering spectrum, to thereby perform the baseline correction.

Next, a D band having a peak top in the vicinity of a Raman shift of 1,340 cm⁻¹ (specifically, in the range of 1,320 cm⁻¹ or more and 1,360 cm⁻¹ or less) was identified. Moreover, a Raman shift (cm⁻¹) B_{d} corresponding to an intensity of half of an intensity I_{d} of the D band (intensity of the peak top of the D band) was subtracted from a Raman shift (cm⁻¹) A_{d} corresponding to the intensity I_{d} of the D band, to thereby calculate a Raman D half width at half maximum (cm⁻¹). That is, the Raman D half width at half maximum of the carbon carrier was calculated by the following equation: Raman D half width at half maximum (cm⁻¹) =A_{d} (cm⁻¹) -B_{d} (cm⁻¹).

Next, a G band having a peak top in the vicinity of a Raman shift of 1,580 cm⁻¹ (specifically, in the range of 1,550 cm⁻¹ or more and 1,610 cm⁻¹ or less) and a 2D band having a peak top in the vicinity of a Raman shift of 2,700 cm⁻¹ (specifically, in the range of 2,670 cm⁻¹ or more and 2,730 cm⁻¹ or less) were identified. Moreover, an intensity I_{2d} of the 2D band (intensity of the peak top of the 2D band) was divided by an intensity I_{g} of the G band (intensity of the peak top of the G band), to thereby calculate a Raman 2D/G ratio. That is, the Raman 2D/G ratio of the carbon carrier was calculated by the following equation: Raman 2D/G ratio=I_{2d}/I_{g}.

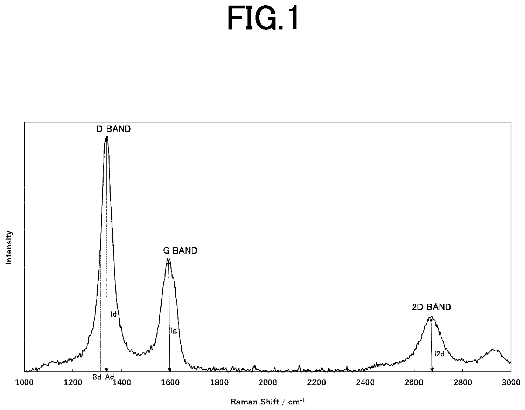

Herein, FIG. 1 is a figure showing an analysis result of a Raman spectrum obtained by Raman spectroscopy of the carbon carrier C1500-G1800 as an example of the Raman spectrum. In FIG. 1, an abscissa represents a Raman shift (cm⁻¹), an ordinate represents a scattering intensity after the baseline correction, A_{d} represents a Raman shift (cm⁻¹) corresponding to the peak top of the D band, and B_{d} represents a Raman shift (cm⁻¹) corresponding to a Raman spectrum exhibiting an intensity of half of the D band intensity I_{d} (height of the peak top of the D band) on a low wavenumber side with respect to the A_{d}. In addition, the intensity I_{g} of the G band (height of the peak top of the G band) and the intensity I_{2d} of the 2D band (height of the peak top of the 2D band) are each also shown in FIG. 1.

### [Powder X-ray Diffraction]

Powder X-ray diffraction (XRD) measurement of the carbon carrier was performed. First, a (002) diffraction line of carbon was analyzed from a diffraction pattern obtained through the XRD measurement of the carbon carrier, and a crystallite size Lc (nm) of the carbon structure of the carbon carrier was determined.

First, in the analysis of the (002) diffraction line of carbon, correction was performed based on "Procedure for the measurements of lattice parameters and crystallite sizes of carbon materials by X-ray diffraction" made by The 117 Committee of the Japan Society for the Promotion of Sciences. The details of the correction are described in a reference (TANSO, No. 221, pp. 52-60 (2006)).

Specifically, in the "Procedure for the measurements of lattice parameters and crystallite sizes of carbon materials by X-ray diffraction," the correction is performed by dividing measurement intensities at respective measurement angles by correction factors FCT at the respective measurement angles calculated by the following equation in advance: correction factor FCT=L·P·A·Fc².

Herein, in the equation of the correction factor, L is represented by the following equation: L=1/(sin²θ·cosθ), P is represented by the following equation: P=(1+cos²2θ·cos²2θ')/(1+cos²2θ'), and A is represented by the following equation: A=[1-sin2θ/2µ'br][1-exp(-2µ't/sinθ)]+(2t·cosθ/br)exp(-2µ't/sinθ). In those equations, θ represents an angle of a goniometer, and θ' represents a diffraction angle of a monochromator crystal when a counter monochromator is used, and represents 0° when the counter monochromator is not used. µ' represents an apparent linear adsorption coefficient of a sample (0.4219 mm⁻¹), "t" represents a sample depth in a sample holder, and br represents the irradiation width of an X ray on a sample surface given by the following equation: br=Rsinβ. In the equation, β represents a divergent slit width (2/3°), and R represents a goniometer radius (285 mm) .

In addition, in the equation of the correction factor, Fc represents an atomic scattering factor, and is obtained by the following equation: Fc=(2.26069·exp(-0.226907·s²)+1.56165·exp(-0.00656665·s²)+1.05075·exp(-0.0975618·s²)+0.839259·exp(-0.555949·s²)+0.286977). In the equation, λ represents the wavelength of an X ray, and "s" is given by the following equation: s=(sinθ)/λ.

Moreover, in the resultant XRD pattern, a diffraction peak in the vicinity of a diffraction angle 2Θ of 26° (specifically, for example, in the range of 2Θ of 20° or more and 28° or less) was subjected to peak separation. The peak separation was performed by approximating overlapping diffraction peaks through superimposition onto Gaussian basic waveforms. The XRD pattern having been subjected to background correction was subjected to fitting by being optimized through use of the peak intensities, peak full widths at half maximum, and peak positions of Gaussian functions serving as the respective components as parameters. The background correction was performed by determining a straight line connecting a diffraction line in the vicinity of a diffraction angle (2Θ) of from 10° to 20° and a diffraction line in the vicinity of a diffraction angle (2Θ) of from 30° to 40° as a background, and subtracting the background from the respective diffraction intensities.

Moreover, the peak separation was performed by separating a diffraction peak in the vicinity of a diffraction angle 2Θ of 26° (diffraction peak having a peak top in the vicinity of a diffraction angle 2Θ of 26°) into at least one diffraction peak of three diffraction peaks f_{broad}, f_{middle}, and f_{narrow}.

The diffraction peak f_{broad} is defined as a diffraction peak having a diffraction angle (2Θ) of 24.0°±4.0° and a full width at half maximum of 10°±7.0°. The diffraction peak f_{middle} is defined as a diffraction peak having a diffraction angle (2Θ) of 26.0°±1.0° and a full width at half maximum of 2.0°±0.9°. The diffraction peak f_{narrow} is defined as a diffraction peak having a diffraction angle (2Θ) of 26.0°±0.6° and a full width at half maximum of 0.5°±0.5°. Two or more diffraction peaks f_{middle} and/or f_{narrow} having different diffraction angles (2θ) and full widths at half maximum may appear at the same time.

More specifically, the peak separation was performed by the following procedure. In the XRD pattern obtained by using a CuKα ray having been subjected to the background correction, a diffraction peak having a peak top in the vicinity of a diffraction angle 2Θ of 26° was approximated through superimposition onto a Gaussian basic waveform, the peak intensity, peak full width at half maximum, and peak position thereof were optimized, and at least one peak of the three diffraction peaks included in the above-mentioned diffraction peak (for example, when two or more diffraction peaks were included, each of the two or more diffraction peaks overlapping each other) was subjected to curve fitting. Thus, the peak separation was performed.

The curve fitting was performed so that a residual sum of squares became smallest. Herein, the term "residual square" refers to the square of a residual at each diffraction angle measured, and the term "residual sum of squares" refers to the sum of these residual squares. In addition, the term "residual" refers to a difference between the intensity of the diffraction peak having a peak top in the vicinity of a diffraction angle 2θ of 26° in the XRD pattern obtained by using a CuKα ray having been subjected to correction, and the total intensity of the diffraction peaks obtained by the separation (for example, when three diffraction peaks f_{broad}, f_{middle}, and f_{narrow} are obtained by the peak separation, the total of the intensities of the three diffraction peaks). Through such peak separation, at least one diffraction peak of the three diffraction peaks f_{broad}, f_{middle}, and f_{narrow} was obtained.

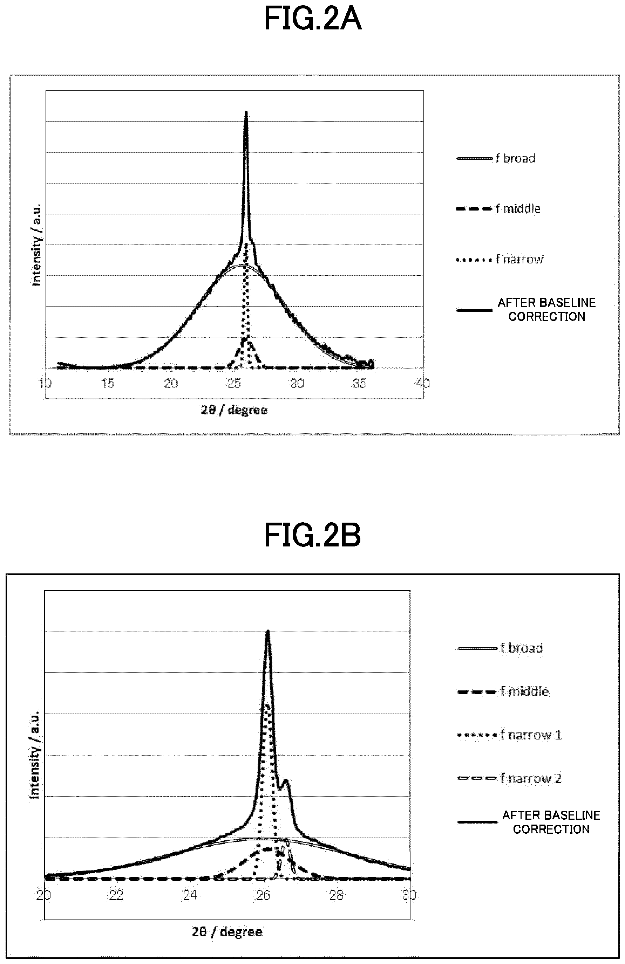

FIG. 2A is a figure showing results obtained by performing peak separation of a diffraction peak in the vicinity of a diffraction angle 2θ of 26° in an XRD pattern obtained for the carbon carrier C1500-G2000. As shown in FIG. 2A, three diffraction peaks f_{broad}, f_{middle}, and f_{narrow} were obtained through the peak separation.

In addition, FIG. 2B is a figure showing results obtained by performing peak separation of a diffraction peak in the vicinity of a diffraction angle 2θ of 26° in an XRD pattern obtained for the carbon carrier C1500-G2400. As shown in FIG. 2B, four diffraction peaks made up of one diffraction peak f_{broad}, one diffraction peak f_{middle}, and two diffraction peaks f_{narrow1} and f_{narrow2} were obtained through the peak separation.

Moreover, the crystallite size Lc (nm) was calculated by analyzing the diffraction peak f_{broad} obtained by the peak separation. That is, the crystallite size Lc was calculated by substituting the Bragg angle and full width at half maximum of the diffraction peak f_{broad} obtained through the peak separation into the following Scherrer's equation: Lc=Kλ/βcosθ.

In the equation, K represents a Scherrer constant (0.94), λ represents the wavelength of the CuKα ray (0.15418 nm), β represents the full width at half maximum (radian) of f_{broad}, and θ represents the Bragg angle (radian) of f_{broad}.

Meanwhile, a (110) diffraction line of carbon was analyzed from the diffraction pattern obtained by XRD of the carbon carrier, and a crystallite size La (nm) of the carbon structure of the carbon carrier was determined. Herein, in the analysis of the (110) diffraction line of carbon, the above-mentioned correction and peak separation based on "Procedure for the measurements of lattice parameters and crystallite sizes of carbon materials by X-ray diffraction" made by The 117 Committee of the Japan Society for the Promotion of Sciences were not performed.

That is, the XRD pattern obtained was only subjected to background correction. The background correction was performed by determining a straight line connecting a diffraction line in the vicinity of a diffraction angle 2Θ of from 30° to 40° and a diffraction line in the vicinity of a diffraction angle 2Θ of from 50° to 60° as a background, and subtracting the background from the respective diffraction intensities.

Moreover, the crystallite size La (nm) was calculated by analyzing a diffraction peak in the vicinity of a diffraction angle 2Θ of 43° (specifically, for example, in the range of 2Θ of 41° or more and 45° or less). That is, the crystallite size La was calculated by substituting the full width at half maximum and peak top angle of the diffraction peak in the vicinity of 43° into the following Scherrer's equation: La=Kλ/βcosθ.

In the equation, K represents a Scherrer constant (0.94), λ represents the wavelength of the CuKα ray (0.15418 nm), β represents the full width at half maximum (radian) of a peak in the vicinity of a diffraction angle 2Θ of 43°, and θ represents the peak top angle (radian) of the peak in the vicinity of a diffraction angle 2θ of 43°.

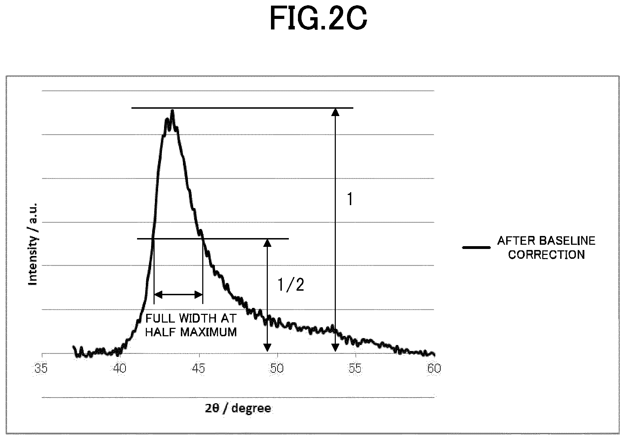

FIG. 2C is a figure showing a diffraction peak in the vicinity of a diffraction angle 2Θ of 43° in the XRD pattern obtained for the carbon carrier C1500-G2000. In FIG. 2C, "1" represents the height (peak intensity) of the peak top of the peak in the vicinity of a diffraction angle 2Θ of 43°, "1/2" represents an intensity of half of the peak intensity, and "full width at half maximum" represents the width of the peak corresponding to the intensity of half of the peak intensity.

### [Specific Surface Area, Average Pore Diameter, Pore Volume, and Hysteresis in Adsorption Isotherm]

The specific surface area, average pore diameter, pore volume, and hysteresis in an adsorption isotherm by a nitrogen adsorption method of the carbon carrier were measured with a specific surface area/pore distribution measuring device (TriStar II 3020, manufactured by Shimadzu Corporation) and analysis software (TriStar II 3020) included therein.

That is, first, water adsorbed on the carbon carrier was removed by keeping 0.1 g of the carbon carrier at 100°C and 6.7×10⁻² Pa for 3 hours. Next, a nitrogen adsorption isotherm at a temperature of 77 K was obtained by measuring a change in amount of nitrogen adsorbed on the carbon carrier in association with a change in pressure of a nitrogen gas at a temperature of 77 K.

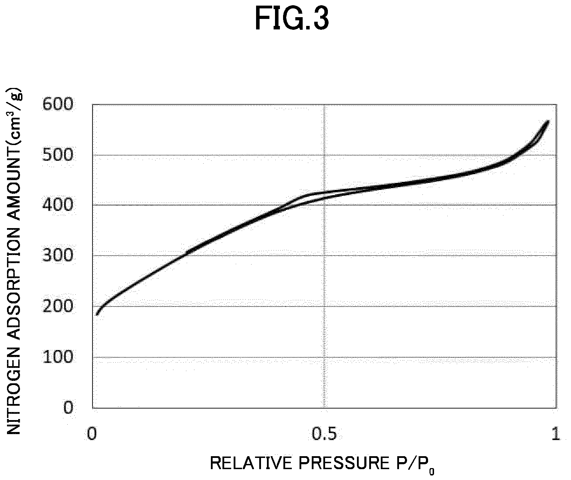

In FIG. 3, a nitrogen adsorption isotherm obtained for the carbon carrier C1500-G1800 is shown as an example of the nitrogen adsorption isotherm obtained at a temperature of 77 K. In the adsorption isotherm shown in FIG. 3, an abscissa represents a relative pressure (P/P₀), which is the ratio of an adsorption equilibrium pressure (P) to a saturated vapor pressure (P₀) (1.01×10⁵ Pa for nitrogen at 77 K), and an ordinate represents a nitrogen adsorption amount (cm³/g). As shown in FIG. 3, an adsorption-side isotherm (adsorption isotherm measured while the relative pressure was increased) and a desorption-side isotherm (adsorption isotherm measured while the relative pressure was reduced) were obtained.

Then, in the nitrogen adsorption isotherm, a nitrogen adsorption amount at a relative pressure (P/P₀) of 0.5 was subtracted from a nitrogen desorption amount at a relative pressure (P/P₀) of 0.5, to thereby calculate a N₂ desorption-adsorption amount difference (cm³/g), which was a difference between the nitrogen desorption amount and the nitrogen adsorption amount.

In addition, the BET specific surface area (m²/g) of the carbon carrier by a nitrogen adsorption method was obtained by a BET method from the nitrogen adsorption isotherm at a temperature of 77 K. In addition, the average pore diameter (nm) of the carbon carrier was calculated by a BJH method from the nitrogen adsorption isotherm at a temperature of 77 K. In addition, the volumes (cm³/g) of pores each having a pore diameter of less than 5 nm were integrated, to thereby calculate a less than 5 nm pore volume (cm³/g). Similarly, the volumes (cm³/g) of pores each having a pore diameter of 5 nm or more and 70 nm or less were integrated, to thereby calculate a 5-70 nm pore volume (cm³/g). Moreover, a ratio (less than 5 nm/5-70 nm pore volume ratio) of the less than 5 nm pore volume (cm³/g) to the 5-70 nm pore volume (cm³/g) was calculated.

### [Median Diameter]

The median diameter of the carbon carrier was measured. First, a dispersion liquid of the carbon carrier was prepared. That is, 10 mg of the carbon carrier, one drop (about 0.05 mL) of a surfactant (neutral detergent), and 40 mL of distilled water were loaded into a glass vessel. After that, the contents were subjected to dispersion treatment for 20 minutes by using a homogenizer (NISSEI Corporation, MODEL: US-150T TIPΦ12) and tuning OUTPUT ADJ to 8, to provide a dispersion liquid of the carbon carrier.

Next, a laser diffraction particle size distribution measuring device (Shimadzu Corporation, SALD-7100H) was used, and the dispersion liquid of the carbon carrier was dropped into the cell of the device so that an appropriate scattering light intensity was obtained. Thus, particle size distribution data with an abscissa representing a particle diameter (µm) and an ordinate representing a cumulative relative particle amount (%) was acquired. A particle diameter at which a cumulative relative particle amount became 50% in the particle size distribution data was obtained as the median diameter (µm) of the carbon carrier.

### [Oxidation Resistance]

For the oxidation resistance of the carbon carrier alone, which had not yet supported catalyst metal particles thereon, cyclic voltammetry (CV) measurement and a potential cycle test were performed by using a rotating ring-disk electrode apparatus (RRDE-3A Rotating Ring-disk Electrode Apparatus Ver. 1.2, manufactured by BAS Inc.) and a dual electrochemical analyzer (CHI700C, manufactured by ALS Co., Ltd.). Moreover, change amounts (dQ) in electric double layer capacitance (Q) in the respective cycles were determined, and the oxidation resistance of the carbon carrier was evaluated by the average value thereof. A specific evaluation method is described below.

First, a working electrode containing the carbon carrier (carbon carrier not having supported thereon catalyst metal particles) in a rotating ring-disk electrode apparatus of a three-electrode system was prepared. Specifically, 5 mg of the carbon carrier, 50 µL of 5% NAFION (trademark) (manufactured by Sigma-Aldrich, NAFION perfluorinated ion-exchange resin, 5% solution (product number: 510211)), 400 µL of water, and 100 µL of isopropyl alcohol were mixed to prepare a slurry. Next, the slurry was subjected to ultrasonic treatment for 10 minutes, and then subjected to homogenizer treatment for 2 minutes. Then, the resultant slurry was applied to a working electrode (ring-disk electrode for RRDE-3A, platinum ring-gold disk electrode, disk diameter: 4 mm, manufactured by BAS Inc.) so that the content of the carbon carrier per unit area of the electrode became 0.1 mg/cm², and dried, to thereby produce a working electrode carrying the carbon carrier.

In addition, a platinum electrode (Pt counter electrode of 23 cm, manufactured by BAS Inc.) was used as a counter electrode, and a reversible hydrogen electrode (RHE) (storage type reversible hydrogen electrode, manufactured by EC Frontier Co., Ltd.) was used as a reference electrode. Thus, a rotating ring-disk electrode apparatus including the working electrode containing the carbon carrier, the platinum electrode serving as the counter electrode, and the reversible hydrogen electrode (RHE) serving as the reference electrode was obtained. A 0.1 M aqueous solution of perchloric acid was used as an electrolytic solution.

Then, an electric double layer capacitance "Q-BOL" (A·sec) at the beginning of life (BOL) in the potential cycle test using the rotating ring-disk electrode apparatus was measured.

That is, cyclic voltammetry (CV) measurement using the rotating ring-disk electrode apparatus of a three-electrode system including the working electrode containing the carbon carrier was performed. Specifically, first, nitrogen bubbling was performed for 10 minutes to remove oxygen in the electrolytic solution. Next, the CV measurement was performed by the following protocol. That is, 5 cycles of potential sweep (one cycle: 1.0 V→0.0 V→1.0 V) was performed at a sweep rate of 50 mV/sec in the potential range of from 0.0 V to 1.0 V (vs. normal hydrogen electrode (NHE)), and a current was recorded as a function of potential.

Herein, an electric double layer capacitance "Q-BOL" (A·sec) at the beginning of life in a durability test was obtained by dividing a CV area (A·V), which was obtained through integration from the voltammogram of the 5th cycle obtained, by the sweep rate (V/sec). In the voltammogram obtained, numerical values were signed so that a reduction current took a negative value and an oxidation current took a positive value.

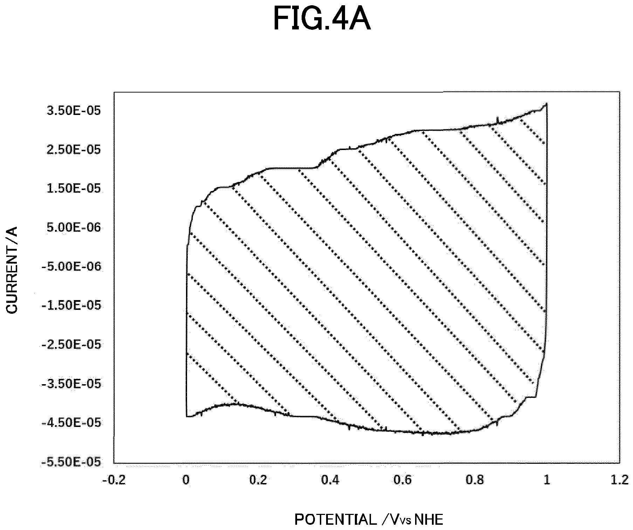

Herein, FIG. 4A is a figure showing, as an example of the above-mentioned voltammogram, a voltammogram of a 5th cycle obtained by using a rotating ring-disk electrode apparatus including a working electrode containing the carbon carrier C1500-G1800. In FIG. 4A, an abscissa represents a potential (V vs. NHE), and an ordinate represents a current (A). In the voltammogram shown in FIG. 4A, the area (A·V) of a region (hatched region) surrounded by a curve at the time of potential sweeping application of from 1.0 V to 0.0 V and a curve at the time of potential sweeping application of from 0.0 V to 1.0 V obtained through integration was divided by the sweep rate (50 mV/sec=0.05 V/sec). Thus, an electric double layer capacitance (A·sec) was obtained.

Next, an oxidation resistance test (potential cycle test) was performed. That is, while nitrogen bubbling was performed, the electrolytic solution was filled with saturated nitrogen. Moreover, a current was recorded as a function of potential during one cycle of first keeping the electrode for 3 seconds in the state where a voltage of 1.4 V (vs. NHE) was applied thereto, and then keeping the electrode for 3 seconds in the state where a voltage of 0 V (vs. NHE) was applied thereto. Moreover, the cycle was repeated 100 times.

At the time of completion of the 100th cycle of the potential cycle test, the same CV measurement as in the case of the electric double layer capacitance "Q-BOL" at the beginning of life in the durability test was performed. Thus, an electric double layer capacitance "Q-100 cycles" (A·sec) at the time of completion of 100 cycles was obtained.

Further, the potential cycle test was performed up to 17,000 cycles. In the 17,000 cycles, the same CV measurement as in the case of the electric double layer capacitance "Q-100 cycles" at the time of completion of 100 cycles was performed at each of the following time points: at the time of completion of 500 cycles; at the time of completion of 1,000 cycles; at the time of completion of 2,000 cycles; at the time of completion of 3,000 cycles; at the time of completion of 4,000 cycles; at the time of completion of 5,000 cycles; at the time of completion of 6,000 cycles; at the time of completion of 7,000 cycles; at the time of completion of 8,000 cycles; at the time of completion of 9,000 cycles; at the time of completion of 10,000 cycles; at the time of completion of 11,000 cycles; at the time of completion of 12,000 cycles; at the time of completion of 13,000 cycles; at the time of completion of 14,000 cycles; at the time of completion of 15,000 cycles; at the time of completion of 16,000 cycles; and at the time of completion of 17,000 cycles, and electric double layer capacitances at the time of completion of the respective cycles (electric double layer capacitances "Q-500 cycles", "Q-1,000 cycles", "Q-2,000 cycles", "Q-3,000 cycles", "Q-4,000 cycles", "Q-5,000 cycles", "Q-6,000 cycles", "Q-7,000 cycles", "Q-8,000 cycles", "Q-9,000 cycles", "Q-10,000 cycles", "Q-11,000 cycles", "Q-12,000 cycles", "Q-13,000 cycles", "Q-14,000 cycles", "Q-15,000 cycles", "Q-16,000 cycles", and "Q-17,000 cycles", respectively) (A·sec) were obtained.

Further, among the electric double layer capacitances "Q-n cycles" at the time of completion of "n" cycles ("n" represents the number of cycles) obtained in that manner, electric double layer capacitances at 9 time points from the completion of 9,000 cycles to the completion of 17,000 cycles were used to calculate eight change amounts "dQ-n cycles" (A·sec) in electric double layer capacitance at the time of completion of "n" cycles from the completion of 10,000 cycles to the completion of 17,000 cycles by the following equation (I). Change amount (A·sec) in electric double layer capacitance at the time of completion of "n" cycles = {electric double layer capacitance at the time of completion of "n" cycles) - {electric double layer capacitance at the time of completion of (n-1,000) cycles)

Specifically, for example, a change amount "dQ-10,000 cycles" in electric double layer capacitance at the time of competition of 10,000 cycles was calculated by subtracting the electric double layer capacitance "Q-9,000 cycles" at the time of competition of 9,000 cycles from the electric double layer capacitance "Q-10,000 cycles" at the time of competition of 10,000 cycles. In addition, for example, a change amount "dQ-17,000 cycles" in electric double layer capacitance at the time of competition of 17,000 cycles was calculated by subtracting the electric double layer capacitance "Q-16,000 cycles" at the time of competition of 16,000 cycles from the electric double layer capacitance "Q-17,000 cycles" at the time of competition of 17,000 cycles.

Moreover, an arithmetic average value of the obtained eight change amounts "dQ-n cycles" in electric double layer capacitance at the time of completion of "n" cycles was calculated, and was used as an average change amount "average dQ" (A·sec) in electric double layer capacitance, which was an indicator of oxidation resistance. Specifically, the average dQ (A·sec) was calculated by the following equation: average dQ=("dQ-10,000 cycles"+"dQ-11,000 cycles"+"dQ-12,000 cycles"+"dQ-13,000 cycles"+"dQ-14,000 cycles"+"dQ-15,000 cycles"+"dQ-16,000 cycles"+"dQ-17,000 cycles")÷8.

Herein, the standard redox potential of carbon is thermodynamically given as described below.

C+H₂O 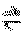 CO(g)+2H⁺+2e⁻(E₀=0.52V)

C+2H₂O 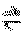 CO₂(g)+4H⁺+4e⁻(E₀=0.21V)

Meanwhile, according to research using highly oriented pyrolytic graphite (HOPG) as a model material in a non-patent document (TANSO 2012 [No. 251] 18-25), it has been revealed that the oxidation reaction of carbon proceeds as follows: a surface functional group such as a hydroxy group is first imparted to a portion susceptible to oxidation, such as an edge, the oxidation reaction proceeds through sequential higher oxidation, and the carbon is finally consumed by being converted into a gas, such as carbon dioxide or carbon monoxide. Herein, in view of the above-mentioned oxidation mechanism, a change in electric double layer capacitance in the process of oxidation of carbon will be considered.

As also described in a non-patent document (Journal of The Electrochemical Society, 156(8) B913-B922 (2009)), when an oxygen functional group such as a hydroxy group is imparted to the surface of carbon in the initial process of its oxidation, the surface of carbon becomes more hydrophilic, and the electric double layer capacitance is increased. Meanwhile, it is conceived that when the oxidation proceeds, carbon is gasified as carbon monoxide or carbon dioxide, and hence carbon disappears, and the electric double layer capacitance is reduced. The degree to which the oxidation proceeds varies depending on the crystallinity or oxidation resistance of carbon. In consideration of the above-mentioned mechanism, as carbon has higher oxidation resistance, the oxidation proceeds more slowly, and the final gasification of carbon can be suppressed more. Accordingly, it is conceived that, also in latter cycles of the above-mentioned oxidation resistance test, the electric double layer capacitance tends to be increased.

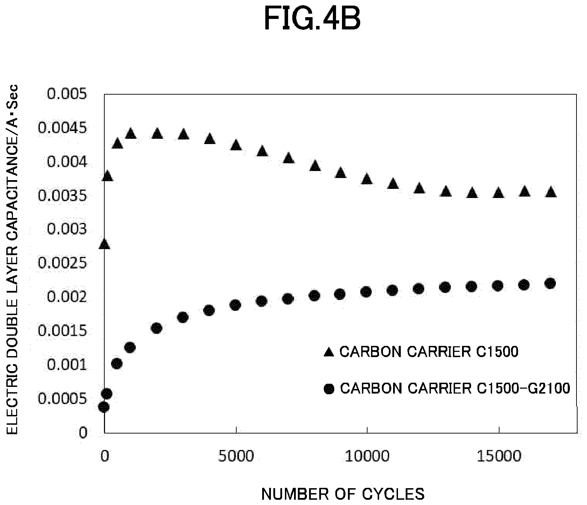

FIG. 4B is a figure showing, as an example of results for experimentally confirming the above-mentioned mechanism, a relationship between the number of cycles (abscissa) and an electric double layer capacitance "Q-n cycles" (A·sec) at the time of completion of each cycle (ordinate) in an oxidation resistance test obtained in each of the cases of carrying the carbon carrier C1500-G2100 and the carbon carrier C1500 on a working electrode of a rotating ring-disk electrode apparatus.

As shown in FIG. 4B, in the case of using the carbon carrier C1500 (triangle marks), the electric double layer capacitance was drastically increased in initial cycles, and after that, the electric double layer capacitance was reduced in and after 2,000 cycles. This is presumably because the oxidation of carbon proceeded from the initial stage of cycles, and gasification of carbon, which was the final stage, occurred.

Meanwhile, in the case of using the carbon carrier C1500-2100 (circle marks), the electric double layer capacitance in initial cycles was increased gently compared to the case of using the carbon carrier C1500 (triangle marks), and a significant reduction in electric double layer capacitance was not observed even after 10,000 cycles. This is presumably because the oxidation of carbon proceeded gently. That is, it was recognized that the carbon carrier C1500-2100 was more excellent in oxidation resistance than the carbon carrier C1500.

As described above, it is conceived that a carbon carrier in which the numerical value of an average value (average dQ) of change amounts in electric double layer capacitance from the completion of 10,000 cycles to 17,000 cycles, which are latter cycles in the oxidation resistance test, shows a larger positive value is less liable to proceed with oxidation of carbon, and has higher oxidation resistance (for example, an increase in hydrophilicity caused by impartment of a surface functional group, which is a factor for increasing the electric double layer capacitance and is the initial-stage process of oxidation of carbon, is predominant, and consumption of carbon caused by gasification, which is a factor for reducing the electric double layer capacitance, is suppressed).

### [Production of Metal-supported Catalyst]

In each of Example 1 to Example 3, Example 5, Example 6, and Example C1 to Example C8, 1 g of the carbon carrier and 20 g of an aqueous solution, which contained chloroplatinic acid (H₂PtCl₆) serving as a platinum precursor in such an amount that a platinum concentration became 5 wt% (platinum content: 1 g), were mixed for 18 hours. After that, the resultant mixed liquid was dried in air at 100°C, and was further kept in nitrogen at 150°C so that the solvent component was volatilized.

First, the resultant solid was subjected to heating treatment in a hydrogen atmosphere (hydrogen gas: 100 vol%) at 825°C for 20 minutes (gas-phase reduction treatment). Subsequently, while the temperature of the atmosphere was maintained within the range of from 820°C to 830°C, the hydrogen atmosphere was replaced with a nitrogen atmosphere (nitrogen gas: 100 vol%), and the solid was subjected to heating treatment in the nitrogen atmosphere at 825°C for 40 minutes. Thus, a metal-supported catalyst including the carbon carrier (the carbon carrier C1500-G1800 in Example 1, the carbon carrier C1500-G1900 in Example 2, the carbon carrier C1500-G2000 in Example 3, the carbon carrier C1500-G2100 in Example 5, the carbon carrier C1500-G2200 in Example 6, the carbon carrier C1500 in Example C1, the carbon carrier C1500-G2400 in Example C2, the carbon carrier C2000 in Example C3, the carbon carrier KB in Example C4, the carbon carrier KB-G2000 in Example C5, the carbon carrier PC in Example C6, the carbon carrier PC-G1700A in Example C7, or the carbon carrier PC-G2000A in Example C8) and platinum particles supported on the carbon carrier as catalyst metal particles was obtained.

In addition, in Example 4, 1 g of the carbon carrier and 20 g of an aqueous solution, which contained chloroplatinic acid (H₂PtCl₆) in such an amount that a platinum concentration became 5 wt% (platinum content: 1 g) and cobalt chloride (CoCl₂) serving as a cobalt precursor in such an amount that a cobalt concentration became 0.216 wt% (cobalt content: 0.043 g), were mixed for 18 hours. After that, the resultant mixed liquid was dried in air at 100°C, and was further kept in nitrogen at 150°C so that the solvent component was volatilized.

First, the resultant solid was subjected to heating treatment in a hydrogen atmosphere (hydrogen gas: 100 vol%) at 800°C for 20 minutes (gas-phase reduction treatment). Subsequently, while the temperature of the atmosphere was maintained within the range of from 790°C to 810°C, the hydrogen atmosphere was replaced with a nitrogen atmosphere (nitrogen gas: 100 vol%), and the solid was subjected to heating treatment in the nitrogen atmosphere at 800°C for 40 minutes. Thus, a metal-supported catalyst including the carbon carrier C1500-G2000 and platinum and cobalt alloy particles supported on the carbon carrier as catalyst metal particles was obtained.

### [Performance Evaluation of Battery including Electrode containing Metal-supported Catalyst]

Performance evaluation of a fuel cell including a cathode containing the metal-supported catalyst was performed. Specifically, first, a battery cathode having a catalyst layer containing a metal-supported catalyst formed thereon was produced. That is, an electrolyte (equivalent weight EW=820) in such an amount that the weight ratio thereof to a carbon carrier was 1.1 was added to 0.25 g of the metal-supported catalyst produced as described above, and 2 g each of distilled water and 1-propanol were added to prepare an electrolyte solution. The electrolyte solution and 25 g of balls were loaded into a pot and mixed with a ball mill at 200 rpm for 50 minutes. Thus, a slurry-like composition for a catalyst layer containing the uniformly dispersed metal-supported catalyst was obtained.

The obtained slurry-like composition for a catalyst layer was applied onto a region having an area of 5 cm² of a gas diffusion layer ("29BC", manufactured by SGL Carbon Japan Co., Ltd.) (2.3 cm×2.3 cm) so that the content of platinum in the catalyst metal particles supported on the metal-supported catalyst per unit area of the battery electrode became 0.2 (mg-Pt/cm²), and was dried to form a catalyst layer on the gas diffusion layer. Thus, a battery electrode having the catalyst layer containing the metal-supported catalyst formed thereon was obtained.

Next, a fuel cell including the battery electrode having the catalyst layer containing the metal-supported catalyst formed thereon was produced. That is, the battery electrode including the catalyst layer (positive electrode catalyst layer) produced as described above was used as a positive electrode.

Meanwhile, a negative electrode was produced as described below. 0.5 g of a commercially available platinum-supported catalyst Pt/C (catalyst containing platinum particles supported on a carbon carrier: UNPC40-II, manufactured by Ishifuku Metal Industry Co., Ltd.), 10 g of 5% NAFION (trademark), 2 g of distilled water, and 25 g of balls were loaded into a pot and mixed with a ball mill at 200 rpm for 50 minutes, to thereby prepare a slurry-like Pt/C composition. A negative electrode including a catalyst layer (negative electrode catalyst layer) formed of the slurry-like Pt/C composition was produced in the same manner as in the above-mentioned positive electrode except that the Pt/C composition was applied onto the gas diffusion layer (5 cm²) so that the amount of Pt/C applied per unit area became 0.1 mg/cm².

Then, a polymer electrolyte membrane ("Nafion (trademark) 211", manufactured by DuPont) was arranged between the above-mentioned positive electrode catalyst layer and the above-mentioned negative electrode catalyst layer, and the resultant was subjected to pressure bonding under the conditions of 150°C and 1 MPa for 3 minutes, to thereby produce a MEA. A pair of gaskets was bonded to the MEA, and further, the resultant MEA was sandwiched between a pair of separators, to thereby produce a fuel cell unit cell. After that, the unit cell produced as described above was installed in a fuel cell automatic evaluation system (manufactured by Toyo Corporation). First, a power generation test was performed, and then a durability test was performed.

In the power generation test, saturated humidified air (oxygen) was supplied at 2.5 L/min to a positive electrode side of the unit cell at a back pressure of 150 kPa (relative humidity: 100%), and saturated humidified hydrogen was supplied at 1.0 L/min to a negative electrode side of the unit cell (relative humidity: 100%), a cell temperature was set to 75°C, and an open circuit voltage was measured for 5 minutes. After that, a cell current density was kept at each current density for 3 minutes from 4.0 A/cm² to 0 A/cm², and a cell voltage was measured.

Moreover, a voltage (mV) at a current density of 2.5 A/cm² was measured as an output characteristic. In addition, a voltage (mV) at a current density of 0.2 A/cm² was measured as catalytic activity. In addition, a voltage (mV) at a current density of 1.0 A/cm² was recorded as a voltage at the beginning of the durability test.

After that, the cell temperature was set to 75°C. Saturated humidified nitrogen was supplied at 0.5 L/min to both sides of the unit cell at a back pressure of 150 kPa (relative humidity: 100%), and saturated humidified hydrogen was supplied at 0.5 mL/min to an anode side of the unit cell (relative humidity: 100%). The durability test was performed by repeating a rectangular wave cycle of first keeping a potential at 0.6 V for 30 seconds and then keeping the potential at 0.95 V for 60 seconds.

After the above-mentioned rectangular wave cycle was performed 10,000 times, the power generation test was performed again. A voltage (mV) at a current density of 1.0 A/cm² after the durability test was measured. Then, a voltage loss (mV), which was a value obtained by subtracting the voltage (mV) at 1.0 A/cm² measured in the power generation test after the durability test (voltage (mV) after 10,000 cycles) from the voltage (mV) at 1.0 A/cm² measured as initial performance in the power generation test before the durability test, was used as an indicator of durability.

### [Results]

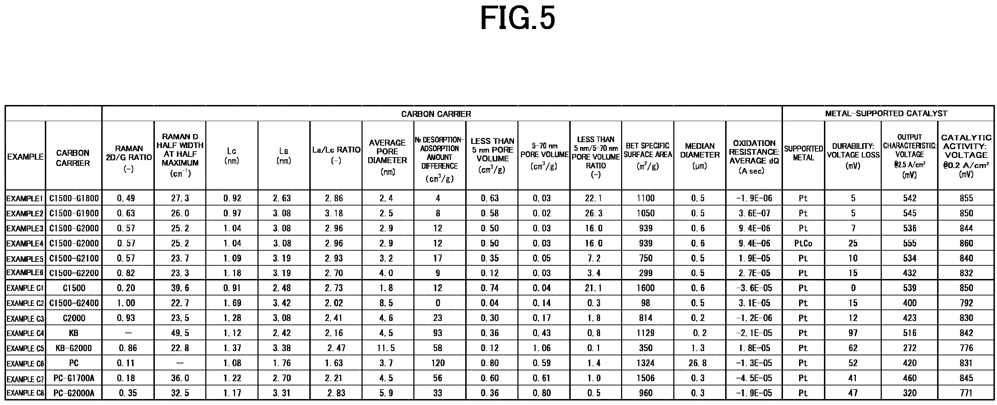

For each of Examples 1 to 6 and Examples C1 to C8, the evaluation results of the characteristics of the carbon carrier and the metal-supported catalyst are shown in FIG. 5.

With regard to a Raman 2D/G ratio, the carbon carriers of Examples 1 to 6 each had a Raman 2D/G ratio higher than those of Examples C1 and C6 to C8, and lower than those of Examples C2, C3, and C5. In the case of the carbon carrier KB of Example C4, a 2D band was not detected in its Raman spectrum.

With regard to a Raman D half width at half maximum, the carbon carriers of Examples 1 to 6 each had a Raman D half width at half maximum larger than those of Examples C2 and C5, smaller than those of Examples C1, C4, C7, and C8, and comparable to that of Example C3. In addition, the carbon carriers of Examples 1 to 4 among Examples 1 to 6 each had a particularly large Raman D half width at half maximum.

With regard to a crystallite size Lc, the carbon carriers of Examples 1 to 6 each had a crystallite size Lc larger than that of Example C1, comparable to those of Examples C4, C6, and C8, and smaller than those of Examples C2, C3, C5, and C7. In addition, the carbon carriers of Examples 1 to 5 among Examples 1 to 6 each had a particularly small crystallite size Lc.

With regard to a crystallite size La, the carbon carriers of Examples 1 to 6 each had a crystallite size La larger than those of Examples C1, C4, and C6, comparable to those of Examples C3 and C7, and smaller than those of Examples C2, C5, and C8.

With regard to an La/Lc ratio, the carbon carriers of Examples 1 to 6 each had an La/Lc ratio higher than those of Examples C2 to C7, and comparable to those of Examples C1 and C8. In addition, the carbon carriers of Examples 1 to 5 among Examples 1 to 6 each had a particularly high La/Lc ratio.

With regard to an average pore diameter, the carbon carriers of Examples 1 to 6 each had an average pore diameter, comparable to that of Example C6, and larger than that of Example C1. In addition, the carbon carriers of Examples 1 to 5 among Examples 1 to 6 each had a particularly small average pore diameter.

With regard to a N₂ desorption-adsorption amount difference, the carbon carriers of Examples 1 to 6 each had a N₂ desorption-adsorption amount difference larger than that of Example C2, comparable to that of Example C1, and smaller than those of Examples C3 to C8.

With regard to a less than 5 nm pore volume, the carbon carriers of Examples 1 to 6 each had a less than 5 nm pore volume higher than that of Example C2, comparable to those of Examples C3 to C5, C7, and C8, and lower than those of Examples C1 and C6. In addition, the carbon carriers of Examples 1 to 5 (particularly, Examples 1 to 4) among Examples 1 to 6 each had a particularly high less than 5 nm pore volume.

With regard to a 5-70 nm pore volume, the carbon carriers of Examples 1 to 6 each had a 5-70 nm pore volume lower than those of Examples C1 to C8.

With regard to a less than 5 nm/5-70 nm pore volume ratio, the carbon carriers of Examples 1 to 6 each had a less than 5 nm/5-70 nm pore volume ratio higher than those of Examples C2 to C8, and comparable to that of Example C1. In addition, the carbon carriers of Examples 1 to 4 among Examples 1 to 6 each had a particularly high less than 5 nm/5-70 nm pore volume ratio.

With regard to a BET specific surface area, the carbon carriers of Examples 1 to 6 each had a BET specific surface area higher than that of Example C2, comparable to those of Examples C3 to C5, and C8, and lower than those of Examples C1, C6, and C7. In addition, the carbon carriers of Examples 1 to 5 among Examples 1 to 6 each had a particularly high BET specific surface area.

With regard to a median diameter, the carbon carriers of Examples 1 to 6 each had a median diameter larger than those of Examples C3, C4, C7, and C8, comparable to those of Examples C1 and C2, and smaller than those of Examples C5 and C6.

With regard to an average change amount (average dQ) in electric double layer capacitance, which represents the oxidation resistance of the carbon carrier in itself, when the average dQ is a negative value, a smaller absolute value means higher oxidation resistance, and when the average dQ is a positive value, a larger absolute value means higher oxidation resistance. In this respect, according to the average dQ shown in FIG. 5, the carbon carriers of Examples 1 to 6 each had oxidation resistance higher than those of Examples C1, C4, and C6 to C8, comparable to those of Examples C3 and C5, and lower than that of Example C2.

With regard to a voltage loss, which represents the durability of the metal-supported catalyst, a lower value represents that the metal-supported catalyst has higher durability. The voltage loss occurs, for example, when aggregation and/or dissolution of the catalyst metal particles supported on the carbon carrier proceeds in the durability test. In this respect, according to the voltage loss shown in FIG. 5, the metal-supported catalysts of Examples 1 to 6 each had durability higher than those of Examples C4 to C8, comparable to those of Examples C2 and C3, and lower than that of Example C1. The metal-supported catalyst of Examples 1 to 4 among Examples 1 to 6 each had particularly excellent durability.

With regard to a voltage (mV) at a current density of 2.5 A/cm², which represents the output characteristic of the metal-supported catalyst, a higher value represents that the metal-supported catalyst has a more excellent output characteristic. That is, water is generated in a large amount in a high current density range of 2.0 A/cm² or more, and hence the inside of pores of the carbon carrier is filled with generated water, and substance transport is inhibited. As a result, the voltage serving as the performance of a battery is liable to be reduced. In this respect, the metal-supported catalysts of Examples 1 to 6 each had an output characteristic higher than those of Examples C2, C3, C5, C6, and C8, and comparable to those of Examples C1, C4, and C7. The metal-supported catalyst of Examples 1 to 5 among Examples 1 to 6 each had a particularly excellent output characteristic.

With regard to a voltage (mV) at a current density of 0.2 A/cm², which represents the catalytic activity of the metal-supported catalyst, a higher value represents that the metal-supported catalyst has more excellent catalytic activity. That is, while the overvoltage of a fuel cell is classified into an activation overvoltage, a resistance overvoltage, and a diffusion overvoltage, the influences of the resistance overvoltage and the diffusion overvoltage are small in a low current density range of 0.2 A/cm², and hence the voltage (mV) at a current density of 0.2 A/cm² is suitable for evaluation of catalytic activity. In this respect, the metal-supported catalysts of Examples 1 to 6 each had catalytic activity higher than those of Examples C2, C5, and C8, and comparable to those of Examples C1, C3, C4, C6, and C7. The metal-supported catalyst of Examples 1 to 5 among Examples 1 to 6 each had particularly excellent catalytic activity.

## Claims

1. A carbon carrier for supporting catalyst metal particles,
the carbon carrier having a ratio of an intensity of a 2D band having a peak top in a vicinity of a Raman shift of 2,680 cm⁻¹ to an intensity of a G band having a peak top in a vicinity of a Raman shift of 1,600 cm⁻¹ of 0.36 or more and 1.0 or less in a Raman spectrum obtained by Raman spectroscopy,
the carbon carrier having a ratio of a crystallite size La obtained from a (110) diffraction line of carbon in an X-ray diffraction pattern obtained by powder X-ray diffraction using a CuKα ray to a crystallite size Lc obtained from a (002) diffraction line of carbon in the X-ray diffraction pattern of 2.50 or more.

2. The carbon carrier according to claim 1, wherein the carbon carrier has a half width at half maximum of a D band having a peak top in a vicinity of a Raman shift of 1,340 cm⁻¹ of 39.0 cm⁻¹ or less in the Raman spectrum obtained by Raman spectroscopy.

3. The carbon carrier according to claim 1 or 2, wherein the crystallite size Lc is 1.65 nm or less.

4. The carbon carrier according to any one of claims 1 to 3, wherein the crystallite size La is 2.00 nm or more.

5. The carbon carrier according to any one of claims 1 to 4, wherein the carbon carrier has an average pore diameter of 5.0 nm or less.

6. The carbon carrier according to any one of claims 1 to 5, wherein the carbon carrier has a volume of pores each having a pore diameter of 5 nm or more and 70 nm or less of 0.13 cm³/g or less.

7. The carbon carrier according to any one of claims 1 to 6, wherein the carbon carrier has a ratio of a volume of pores each having a pore diameter of less than 5 nm to a volume of pores each having a pore diameter of 5 nm or more and 70 nm or less of 2.0 or more.

8. The carbon carrier according to any one of claims 1 to 7, wherein the carbon carrier has a volume of pores each having a pore diameter of less than 5 nm of 0.05 cm³/g or more.

9. The carbon carrier according to any one of claims 1 to 8, wherein the carbon carrier has a difference obtained by, in a nitrogen adsorption isotherm obtained at a temperature of 77 K, subtracting a nitrogen adsorption amount at a relative pressure of 0.5 from a nitrogen desorption amount at a relative pressure of 0.5 of 50 cm³/g or less.

10. The carbon carrier according to any one of claims 1 to 9, wherein the carbon carrier has a BET specific surface area of 150 m²/g or more.

11. The carbon carrier according to any one of claims 1 to 10, wherein the carbon carrier has a median diameter of 3.0 µm or less.

12. A metal-supported catalyst, comprising:
the carbon carrier of any one of claims 1 to 11; and
catalyst metal particles supported on the carbon carrier.

13. An electrode, comprising the metal-supported catalyst of claim 12.

14. A battery, comprising the electrode of claim 13.
